# EUROPEAN PATENT APPLICATION

(11) **EP 4 333 233 A1**
(43) Date of publication of application: **06.03.2024**
(21) Application number: 21939194.3
(22) Date of filing: 26.04.2021
(51) Int. Cl.: H02J 1/00

(54) **POWER FEED APPARATUS AND POWER FEED METHOD**

(71) Applicant: Trinity, Inc., Niiza-shi, Saitama 352-0001 (JP)
(72) Inventor: HOSHIKAWA, Tetsushi, Niiza-shi, Saitama 352-0001 (JP)
(74) Representative: Becker, Eberhard
(86) International application number: PCT/JP2021/016691
(87) International publication number: WO 2022/230031

(57) **Abstract**

[Problem] To efficiently supply power with a power feed apparatus having a plurality of USB ports. [Solution] This power feed apparatus includes: a plurality of USB ports compatible with the USB-PD standard; a plurality of PD controllers; and a master controller. The master controller determines the maximum power (W_{N+1}) that can be supplied to a power-receiving device without acquiring a power profile of the power receiving device. The PD controller generates a PDO list and negotiates with the power-receiving device without acquiring the power profile of the power-receiving device.

## Description

### Technical Field

The present invention relates to a power supply apparatus and a power supply method compatible with the USB-PD standard.

### Background Art

It is known to supply power from a USB port to a device electrically connected to the USB port. Further, the USB-PD standard has been established as a standard for supplying power from a USB port. As a newer USB standard, the USB Type-C interface is becoming popular. According to the USB Type-C interface, ports of the same shape are used for power supply and power reception. Therefore, a single port can handle both power supply and power reception. The PD standard is also adopted for the USB Type-C standard. With the USB-PD, a larger voltage and current can be exchanged, so charging in a shorter time can be realized. In the future, it is expected that the USB-PD function will spread along with the USB Type-C interface.

Regarding the USB-PD standard, when a USB port of a power reception device is inserted into a USB port of a power supply apparatus, a negotiation is performed between the power supply apparatus and the power reception device. In this negotiation, the power supply apparatus makes a contract with the power reception device to provide maximum power to be supplied and supplies the power to the power reception device.

In the case of a power supply apparatus having a plurality of USB ports, when USB ports of the plurality of power reception devices are inserted into each of the USB ports, the power supply apparatus distributes the maximum power, which can be supplied, to the plurality of power reception devices and makes contracts with the plurality of power reception devices, in negotiations. When the sum of operating power required by each of the plurality of power reception devices exceeds the maximum power of the power supply apparatus, the power supply apparatus makes contracts with some power reception devices to provide maximum power, which is less than the required operating power, in negotiations.

Regarding the USB type-C standard, in the case of a power supply apparatus having a plurality of USB ports, it is required that each USB Type-C port can output 5 V/1.5 A to provide at least 7.5 W at each port and that the contracted maximum power reaches within 3 seconds after the power reception device is connected (NPL 1). Therefore, in the case of a power supply apparatus having a plurality of USB ports in accordance with the USB type-C standard, it is necessary to perform a negotiation and to make a contract with a power reception device at each port to satisfy these requirements.

In order to ensure a specific power reception device, in which maximum power that is less than the requested operating power is allocated, to be allocated maximum power equal to or greater than the requested operating power, for example, it is required to remove USB ports of the other power reception devices and the specific power reception device from the USB ports of the power supply apparatus and reinsert the USB ports. In this way, the negotiation is performed again, and a contract can be made with the specific power reception device to provide the maximum power equal to or greater than the requested operating power. However, in this case, it is necessary to insert and remove the USB port, which is inconvenient for a user.

Further, when the maximum power that can be supplied by the power supply apparatus is increased, it becomes possible to allocate maximum power equal to or greater than the required operating power to the specific power reception device without inserting/removing the power reception device at the USB port. However, in this case, the power supply apparatus becomes physically large, which causes problems in terms of manufacturing cost and portability.

PTL 1 discloses a method of controlling a new contract with a newly connected power reception device and a re-contract with an already connected power reception device in a power supply apparatus having a plurality of USB ports compatible with the USB-PD standard. In this example, power is distributed to each power reception device based on the maximum power reception capability of each power reception device registered in a power profile table received by a controller from each power reception device.

However, in general, as the power supply from the power supply apparatus to the power reception device progresses, the power actually consumed by the power reception device becomes lower than contract power. Therefore, a new power reception device may connect to a port in a state in which excessive power is allocated to the already connected power reception device. In this example, it is necessary to operate in a state in which the minimum power (7.5 W), which is required in the USB Type-C standard, can be supplied to an empty port. Therefore, it is necessary to ensure power, which is much higher than the power consumption of the actual power reception device, as power that can be supplied by the power supply apparatus, which inevitably increases the size and cost of the power supply apparatus.

In this example, when a power reception device that does not meet the standards or a power reception device having a certain type of battery is connected, the controller cannot acquire the power profile table of the power reception device, and a charging device cannot be operated. Further, a button or a lamp for a user described in PTL 1 may complicate the user's operation and cause an increase in the size and cost of the charging device.

### Citation List

### Non-Patent Literature

[NPL 1] "Universal Serial Bus Type-C Cable and Connector Specification Release 2.0 August 21009", "4.8.6. USB Type-C Multi-Port Chargers"

### Patent Literature

[PTL 1] JP6812285B2

### Summary of Invention

### Technical Problem

The present inventor aimed to solve the above problems. That is, the present inventor sought a power supply apparatus and a power supply method capable of satisfying the requirements of the USB-PD standard, especially the USB Type-C standard, avoiding excessive power distribution, and efficiently supplying power to a plurality of power reception devices.

### Solution to Problem

As a result, the present inventor succeeded in significantly advancing the power supply apparatus and the power supply method in the related art by using a groundbreaking technique, that is a technique in which two types of controllers: a PD controller and a master controller distribute power to each power reception device by utilizing the power that is actually consumed by the connected power reception device. That is, the present invention is as follows.

### (Invention 1)

Provided is a power supply apparatus that includes a plurality of USB ports compatible with a USB-PD standard, a plurality of PD controllers, and a master controller, in which the PD controller is disposed in each of the plurality of USB ports and the master controller is capable of communicating with each of the plurality of PD controllers, in which in a case where an upper limit value of total supplied power of the power supply apparatus is denoted as Wₘₐₓ, contract power of a power reception device connected to the plurality of USB ports is denoted as Wc, and used power of the power reception device connected to the plurality of USB ports is denoted as Wu (where the Wu is a value obtained by performing a filter process on an actually measured value of power consumption of the power reception device), in a state in which N (where N is an integer equal to or greater than 1) power reception devices (D₁ to D_{N}) are connected to N USB ports (P₁ to P_{N}), the PD controllers (PDC₁ to PDC_{N}), which are respectively connected to the power reception devices (D₁ to D_{N}), notify the master controller of the Wc and the Wu for each of the power reception devices (D₁ to D_{N}), and power supply is started when an (N+1)-th power reception device (D_{N+1}) is connected to a USB port (P_{N+1}) other than the USB ports (P₁ to P_{N}), for the power reception device (D_{N+1}) through the following Steps 1, 2, and 3.
Step 1: a PD controller (PDC_{N+1}) connected to the USB port (P_{N+1}) transmits a connection signal of the power reception device (D_{N+1}) to the master controller without acquiring a power profile of the power reception device (D_{N+1}).
Step 2: the master controller that has received the connection signal determines maximum power (W_{N+1}) that is capable of being supplied to the power reception device (D_{N+1}) by referring to the Wₘₐₓ, the Wc, and the Wu without acquiring the power profile of the power reception device (D_{N+1}) and transmits the W_{N+1} to the PD controller (PDC_{N+1}).
Step 3: the PD controller (PDC_{N+1}) that has received the W_{N+1} generates a power delivery object (PDO) list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 2)

The power supply apparatus according to Invention 1, in which in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is established, the master controller that has received the connection signal determines the W_{N+1} by referring to the Wc, the Wu, the [Wₘₐₓ - Wc_{(1toN)}], and the Wₘᵢₙ without acquiring the power profile of the power reception device (D_{N+1}) and transmits the W_{N+1} to the PD controller (PDC_{N+1}), and in the Step 3, the PD controller (PDC_{N+1}) that has received the W_{N+1} generates a power delivery object (PDO) list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 3)

The power supply apparatus according to Invention 2, in which in the Step 2, in a case where the master controller that has received the connection signal detects at least one power reception device (D_{H0}) for which Relation (4): Wc > Wu is established among the power reception devices (D₁ to D_{N}) by referring to the Wc, the Wu, the [Wₘₐₓ - Wc_{(1toN)}], and the Wₘᵢₙ, the master controller determines maximum power (Wrc), which allows a re-contract with the power reception device (D_{H0}), and the W_{N+1}, transmits the Wrc to a PD controller (PDC_{H0}) disposed at the USB port of the power reception device (D_{H0}), and transmits the W_{N+1} to the PD controller (PDC_{N+1}), and in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value, and the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 4)

The power supply apparatus according to Invention 1, in which in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is not established and the master controller detects one power reception device (D_{H1}), among the N power reception devices (D₁ to D_{N}), that satisfies Relation (2): (Wc - Wu) >_ Wₘᵢₙ, the master controller that has received the connection signal determines maximum power (Wrc), which allows a re-contract with the power reception device (D_{H1}), and the W_{N+1} by referring to the Wₘₐₓ, the Wc, the Wu, and the Wₘᵢₙ, transmits the Wrc to a PD controller (PDC_{H1}) connected to the power reception device (D_{H1}), and transmits the W_{N+1} to the PD controller (PDC_{N+1}), and in the Step 3, the PD controller (PDC_{H1}) that has received the Wrc generates a PDO list based on the Wrc, performs a negotiation with the power reception device (D_{H1}) by using the PDO list, and makes a re-contract with the power reception device (D_{H1}) at a lower power value, and the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 5)

The power supply apparatus according to Invention 4, in which in the Step 2, in a case where the master controller that has received the connection signal detects at least one power reception device (D_{H0}) other than the power reception device (D_{H1}) for which Relation (4): Wc > Wu is established among the power reception devices (D₁ to D_{N}) by referring to the Wₘₐₓ, the Wc, the Wu, and the Wₘᵢₙ, the master controller determines maximum power (Wrc) which allows a re-contract with the power reception device (D_{H0}), the maximum power (Wrc) which allows a re-contract with the power reception device (D_{H1}), and the W_{N+1}, transmits the Wrc to a PD controller (PDC_{H0}) connected to the power reception device (D_{H0}), transmits the Wrc to the PD controller (PDC_{H1}) connected to the power reception device (D_{H1}), and transmits the W_{N+1} to the PD controller (PDC_{N+1}), and in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value, the PD controller (PDC_{H1}) that has received the Wrc generates a PDO list based on the Wrc, performs a negotiation with the power reception device (D_{H1}) by using the PDO list, and makes a re-contract with the power reception device (D_{H1}) at a lower power value, and the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 6)

The power supply apparatus according to Invention 1, in which in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is not established and the master controller does not detect one power reception device (D_{H1}), among the N power reception devices (D₁ to D_{N}), that satisfies Relation (2): (Wc - Wu) ≥ Wₘᵢₙ, the master controller detects m (where m is an integer that satisfies 1 ≤ m ≤ N) power reception devices (D_{H2}), among the N power reception devices (D₁ to D_{N}), that satisfy Relation (3): Wc ≥ (Wₘᵢₙ + Wₘᵢₙ), and the master controller that has received the connection signal determines maximum power (Wrc), which allows a re-contract with the power reception device (D_{H2}), and the W_{N+1} by referring to the Wₘₐₓ, the Wc, the Wu, and the Wₘᵢₙ, transmits the Wrc to a PD controller (PDC_{H2}) connected to the power reception device (D_{H2}), and transmits the W_{N+1} to the PD controller (PDC_{N+1}), and in the Step 3, the PD controller (PDC_{H2}) that has received the Wrc generates a PDO list based on the Wrc, performs a negotiation with the power reception device (D_{H2}) by using the PDO list, and makes a re-contract with the power reception device (D_{H2}) at a lower power value, and the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 7)

The power supply apparatus according to Invention 6, in which in the Step 2, in a case where the master controller that has received the connection signal detects at least one power reception device (D_{H0}) other than the power reception device (D_{H1}) for which Relation (4): Wc > Wu is established among the power reception devices (D₁ to D_{N}) by referring to the Wₘₐₓ, the Wc, the Wu, and the Wₘᵢₙ, the master controller determines maximum power (Wrc) which allows a re-contract with the power reception device (D_{H0}), the maximum power (Wrc) which allows a re-contract with the power reception device (D_{H2}), and the W_{N+1}, transmits the Wrc to a PD controller (PDC_{H0}) connected to the power reception device (D_{H0}), transmits the Wrc to the PD controller (PDC_{H2}) connected to the power reception device (D_{H2}), and transmits the W_{N+1} to the PD controller (PDC_{N+1}), and in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value, the PD controller (PDC_{H2}) that has received the Wrc generates a PDO list based on the Wrc, performs a negotiation with the power reception device (D_{H2}) by using the PDO list, and makes a re-contract with the power reception device (D_{H2}) at a lower power value, and the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 8)

The power supply apparatus according to Invention 1, in which after the power supply to the power reception device (D_{N+1}) is started, in a state in which (N+1) power reception devices (D₁ to D_{N+1}) are connected to (N+1) USB ports (P₁ to P_{N+1}), the PD controllers (PDC₁ to PDC_{N+1}) respectively connected to the power reception devices (D₁ to D_{N+1}) notify the master controller of the Wc and the Wu for each of the power reception devices (D₁ to D_{N+1}), and perform the following Steps 4, 5, and 6.

Step 4: the master controller determines whether or not Relation (5): Wc > Wu is established for each of the power reception devices (D₁ to D_{N+1}), when none of the power reception devices (D₁ to D_{N+1}) that satisfies the Relation (5) is detected, the master controller does not proceed to next Step 5 and waits for a next notification related to the Wc and the Wu provided by the PD controllers (PDC₁ to PDC_{N+1}), and when one or more power reception devices (Dₕ) for which the Relation (5) is established are detected, the Step 4 proceeds to the next Step 5.

Step 5: the master controller determines maximum power (Wrc) which allows a re-contract with the power reception device (Dₕ) by referring to the Wₘₐₓ, the Wc, the Wu, and the Wₘᵢₙ and transmits the Wrc to a PD controller (PDCₕ) connected to the power reception device (Dₕ).

Step 6: the PD controller (PDCₕ) that has received the Wrc generates a PDO list based on the Wrc, performs a negotiation with the power reception device (Dₕ) by using the PDO list, and makes a re-contract with the power reception device (Dₕ) at a lower power value.

### (Invention 9)

The power supply apparatus according to Invention 8, in which in the Step 5, the master controller determines the maximum power (Wrc) which allows a re-contract with the power reception device (Dₕ) and maximum power (Wrc) which allows a re-contract with at least one power reception device (D_{L}) other than the power reception device (Dₕ) by referring to the Wₘₐₓ, the Wc, the Wu, and the Wₘᵢₙ, transmits the Wrc to the PD controller (PDCₕ) connected to the power reception device (Dₕ), and transmits the Wrc to a PD controller (PDC_{L}) connected to the power reception device (D_{L}), and in the Step 6, the PD controller (PDCₕ) that has received the Wrc generates a PDO list based on the Wrc, performs a negotiation with the power reception device (Dₕ) by using the PDO list, and makes a re-contract with the power reception device (Dₕ) at a lower power value, and the PD controller (PDC_{L}) that has received the Wrc generates a PDO list based on the Wrc, performs a negotiation with the power reception device (D_{L}) by using the PDO list, and makes a re-contract with the power reception device (D_{L}) at a higher power value.

### (Invention 10)

The power supply apparatus according to Invention 9, in which the at least one power reception device (D_{L}) includes the power reception device (D_{N+1}) where a connection is made at an (N+1)-th place.

### (Invention 11)

The power supply apparatus according to Invention 8, in which the Steps 4, 5, and 6 are repeated in this order unless the power reception device is inserted or removed.

### (Invention 12)

The power supply apparatus according to Invention 11, in which the Step 4 is performed at fixed time intervals unless the power reception device is inserted or removed.

### (Invention 13)

The power supply apparatus according to Invention 1, in which the plurality of USB ports, which are compatible with the USB-PD standard, are compatible with a USB Type-C standard.

### (Invention 14)

Provided is a power supply method including: in a power supply apparatus that includes a plurality of USB ports compatible with a USB-PD standard, a plurality of PD controllers, and a master controller, in which the PD controller is disposed in each of the plurality of USB ports and the master controller is capable of communicating with each of the plurality of PD controllers, in a case where an upper limit value of total supplied power of the power supply apparatus is denoted as Wₘₐₓ, contract power of a power reception device connected to the plurality of USB ports is denoted as Wc, and used power of the power reception device connected to the plurality of USB ports is denoted as Wu (where the Wu is a value obtained by performing a filter process on an actually measured value of power consumption of the power reception device), causing the PD controllers (PDC₁ to PDC_{N}), in a state in which N (where N is an integer equal to or greater than 1) power reception devices (D₁ to D_{N}) are connected to N USB ports (P₁ to P_{N}), which are respectively connected to the power reception devices (D₁ to D_{N}), to notify the master controller of the Wc and the Wu for each of the power reception devices (D₁ to D_{N}); and starting power supply when an (N+1)-th power reception device (D_{N+1}) is connected to a USB port (P_{N+1}) other than the USB ports (P₁ to P_{N}), for the power reception device (D_{N+1}) through the following Steps 1, 2, and 3.

Step 1: a PD controller (PDC_{N+1}) connected to the USB port (P_{N+1}) transmits a connection signal of the power reception device (D_{N+1}) to the master controller without acquiring a power profile of the power reception device (D_{N+1}).

Step 2: the master controller that has received the connection signal determines maximum power (W_{N+1}) that is capable of being supplied to the power reception device (D_{N+1}) by referring to the Wₘₐₓ, the Wc, and the Wu without acquiring the power profile of the power reception device (D_{N+1}) and transmits the W_{N+1} to the PD controller (PDC_{N+1}).

Step 3: the PD controller (PDC_{N+1}) that has received the W_{N+1} generates a power delivery object (PDO) list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 15)

The power supply method according to Invention 14, in which in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is established, the master controller that has received the connection signal determines the W_{N+1} by referring to the Wc, the Wu, the [Wₘₐₓ - Wc_{(1toN)}], and the Wₘᵢₙ without acquiring the power profile of the power reception device (D_{N+1}) and transmits the W_{N+1} to the PD controller (PDC_{N+1}), and in the Step 3, the PD controller (PDC_{N+1}) that has received the W_{N+1} generates a power delivery object (PDO) list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 16)

The power supply method according to Invention 15, in which in the Step 2, in a case where the master controller that has received the connection signal detects at least one power reception device (D_{H0}) for which Relation (4): Wc > Wu is established among the power reception devices (D₁ to D_{N}) by referring to the Wc, the Wu, the [Wₘₐₓ - Wc_{(1toN)}], and the Wₘᵢₙ, the master controller determines maximum power (Wrc), which allows a re-contract with the power reception device (D_{H0}), and the W_{N+1}, transmits the Wrc to a PD controller (PDC_{H0}) connected to the power reception device (D_{H0}), and transmits the W_{N+1} to the PD controller (PDC_{N+1}), and in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value, and the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 17)

The power supply method according to Invention 14, in which in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is not established and the master controller detects one power reception device (D_{H1}), among the N power reception devices (D₁ to D_{N}), that satisfies Relation (2): (Wc - Wu) >_ Wₘᵢₙ, the master controller that has received the connection signal determines maximum power (Wrc), which allows a re-contract with the power reception device (D_{H1}), and the W_{N+1} by referring to the Wₘₐₓ, the Wc, the Wu, and the Wₘᵢₙ, transmits the Wrc to a PD controller (PDC_{H1}) connected to the power reception device (D_{H1}), and transmits the W_{N+1} to the PD controller (PDC_{N+1}), and in the Step 3, the PD controller (PDC_{H1}) that has received the Wrc generates a PDO list based on the Wrc, performs a negotiation with the power reception device (D_{H1}) by using the PDO list, and makes a re-contract with the power reception device (D_{H1}) at a lower power value, and the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 18)

The power supply method according to Invention 17, in which in the Step 2, in a case where the master controller that has received the connection signal detects at least one power reception device (D_{H0}) other than the power reception device (D_{H1}) for which Relation (4): Wc > Wu is established among the power reception devices (D₁ to D_{N}) by referring to the Wₘₐₓ, the Wc, the Wu, and the Wₘᵢₙ, the master controller determines maximum power (Wrc) which allows a re-contract with the power reception device (D_{H0}), the maximum power (Wrc) which allows a re-contract with the power reception device (D_{H1}), and the W_{N+1}, transmits the Wrc to a PD controller (PDC_{H0}) connected to the power reception device (D_{H0}), transmits the Wrc to the PD controller (PDC_{H1}) connected to the power reception device (D_{H1}), and transmits the W_{N+1} to the PD controller (PDC_{N+1}), and in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value, the PD controller (PDC_{H1}) that has received the Wrc generates a PDO list based on the Wrc, performs a negotiation with the power reception device (D_{H1}) by using the PDO list, and makes a re-contract with the power reception device (D_{H1}) at a lower power value, and the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 19)

The power supply method according to Invention 14, in which in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is not established and the master controller does not detect one power reception device (D_{H1}), among the N power reception devices (D₁ to D_{N}), that satisfies Relation (2): (Wc - Wu) ≥ Wₘᵢₙ, the master controller detects m (where m is an integer that satisfies 1 ≤ m ≤ N) power reception devices (D_{H2}), among the N power reception devices (D₁ to D_{N}), that satisfy Relation (3): Wc ≥ (Wₘᵢₙ + Wₘᵢₙ), and the master controller that has received the connection signal determines maximum power (Wrc), which allows a re-contract with the power reception device (D_{H2}), and the W_{N+1} by referring to the Wₘₐₓ, the Wc, the Wu, and the Wₘᵢₙ, transmits the Wrc to a PD controller (PDC_{H2}) connected to the power reception device (D_{H2}), and transmits the W_{N+1} to the PD controller (PDC_{N+1}), and in the Step 3, the PD controller (PDC_{H2}) that has received the Wrc generates a PDO list based on the Wrc, performs a negotiation with the power reception device (D_{H2}) by using the PDO list, and makes a re-contract with the power reception device (D_{H2}) at a lower power value, and the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 20)

The power supply method according to Invention 19, in which in the Step 2, in a case where the master controller that has received the connection signal detects at least one power reception device (D_{H0}) other than the power reception device (D_{H1}) for which Relation (4): Wc > Wu is established among the power reception devices (D₁ to D_{N}) by referring to the Wₘₐₓ, the Wc, the Wu, and the Wₘᵢₙ, the master controller determines maximum power (Wrc) which allows a re-contract with the power reception device (D_{H0}), the maximum power (Wrc) which allows a re-contract with the power reception device (D_{H2}), and the W_{N+1}, transmits the Wrc to a PD controller (PDC_{H0}) connected to the power reception device (D_{H0}), transmits the Wrc to the PD controller (PDC_{H2}) connected to the power reception device (D_{H2}), and transmits the W_{N+1} to the PD controller (PDC_{N+1}), and in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value, the PD controller (PDC_{H2}) that has received the Wrc generates a PDO list based on the Wrc, performs a negotiation with the power reception device (D_{H2}) by using the PDO list, and makes a re-contract with the power reception device (D_{H2}) at a lower power value, and the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

### (Invention 21)

The power supply method according to Invention 14, in which after the power supply to the power reception device (D_{N+1}) is started, in a state in which (N+1) power reception devices (D₁ to D_{N+1}) are connected to (N+1) USB ports (P₁ to P_{N+1}), the PD controllers (PDC₁ to PDC_{N+1}) respectively connected to the USB ports (P₁ to P_{N+1}) notify the master controller of the Wc and the Wu for each of the power reception devices (D₁ to D_{N+1}), and perform the following Steps 4, 5, and 6.

Step 4: the master controller determines whether or not Relation (5): Wc > Wu is established for each of the power reception devices (D₁ to D_{N+1}), when none of the power reception devices (D₁ to D_{N+1}) that satisfies the Relation (5) is detected, the master controller does not proceed to next Step 5 and waits for a next notification related to the Wc and the Wu provided by the PD controllers (PDC₁ to PDC_{N+1}), and when one or more power reception devices (Dₕ) for which the Relation (5) is established are detected, the Step 4 proceeds to the next Step 5.

Step 5: the master controller determines maximum power (Wrc) which allows a re-contract with the power reception device (Dₕ) by referring to the Wₘₐₓ, the Wc, the Wu, and the Wₘᵢₙ and transmits the Wrc to a PD controller (PDCₕ) connected to the power reception device (Dₕ).

Step 6: the PD controller (PDCₕ) that has received the Wrc generates a PDO list based on the Wrc, performs a negotiation with the power reception device (Dₕ) by using the PDO list, and makes a re-contract with the power reception device (Dₕ) at a lower power value.

### (Invention 22)

The power supply method according to Invention 21, in which in the Step 5, the master controller determines the maximum power (Wrc) which allows a re-contract with the power reception device (Dₕ) and maximum power (Wrc) which allows a re-contract with at least one power reception device (D_{L}) other than the power reception device (Dₕ) by referring to the Wₘₐₓ, the Wc, the Wu, and the Wₘᵢₙ, transmits the Wrc to the PD controller (PDCₕ) connected to the power reception device (Dₕ), and transmits the Wrc to a PD controller (PDC_{L}) connected to the power reception device (D_{L}), and in the Step 6, the PD controller (PDCₕ) that has received the Wrc generates a PDO list based on the Wrc, performs a negotiation with the power reception device (Dₕ) by using the PDO list, and makes a re-contract with the power reception device (Dₕ) at a lower power value, and the PD controller (PDC_{L}) that has received the Wrc generates a PDO list based on the Wrc, performs a negotiation with the power reception device (D_{L}) by using the PDO list, and makes a re-contract with the power reception device (D_{L}) at a higher power value.

### (Invention 23)

The power supply method according to Invention 22, in which the at least one power reception device (D_{L}) includes the power reception device (D_{N+1}) where a connection is made at an (N+1)-th place.

### (Invention 24)

The power supply method according to Invention 21, in which the Steps 4, 5, and 6 are repeated in this order unless the power reception device is inserted or removed.

### (Invention 25)

The power supply method according to Invention 24, in which the Step 4 is performed at fixed time intervals unless the power reception device is inserted or removed.

### (Invention 26)

The power supply method according to Invention 14, in which the plurality of USB ports, which are compatible with the USB-PD standard, are compatible with a USB Type-C standard. Advantageous Effects of Invention

In a power supply apparatus and a power supply method of the present invention, a negotiation with a new power reception device is started without acquiring a power profile of the new power reception device. Before this negotiation, the already connected power reception device can be re-contracted to reduce excessive allocated power. Further, after a contract with the new power reception device is completed, contracts can be updated to ensure that power is supplied to each power reception device at a proper level by periodically determining whether there is an excessive allocation of power to all power reception devices. According to the power supply apparatus and the power supply method of the present invention, power can be efficiently distributed to a large number of power reception devices.

### Brief Description of Drawings

Fig. 1 is an example of a power supply apparatus of the present invention.
Fig. 2 is an example of a power supply apparatus of the present invention.
Fig. 3 is an example of a power supply apparatus of the present invention.
Fig. 4 is an example of a power supply method and an operation flow of the power supply method of the present invention.
Fig. 5 is an example of the power supply method and an operation flow of the power supply method of the present invention.
Fig. 6 is an example of the power supply method and an operation flow of the power supply method of the present invention.

### Description of Embodiments

### [Power supply apparatus]

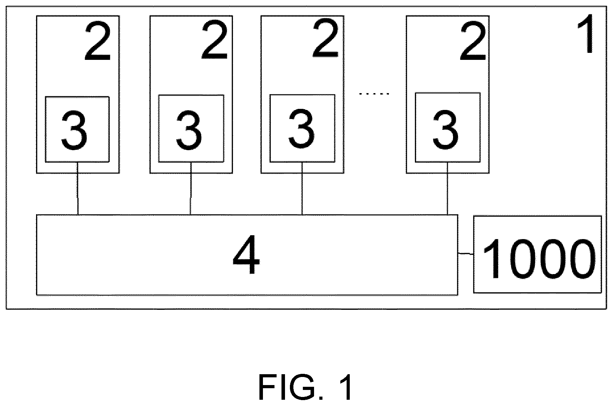

Hereinafter, a power supply apparatus of the present invention will be described with reference to Figs. 1, 2, and 3. Figs. 1, 2, and 3 are reference diagrams for understanding dispositions of main parts of the power supply apparatus of the present invention, and the present invention is not limited to Figs. 1, 2, and 3. The actual circuit and communication line of the power supply apparatus are not depicted, and shapes or sizes are exaggerated or omitted.

As shown in Fig. 1, the power supply apparatus (1) of the present invention includes a plurality of USB ports (2) compatible with the USB-PD standard, a plurality of PD controllers (3), and a master controller (4). The PD controller (3) is disposed in each of the plurality of USB ports (2), and the master controller (3) is capable of communicating with each of the plurality of PD controllers (3). A serial interface such as I2C or SPI is generally used for communication between the PD controller (3) and the master controller (3).

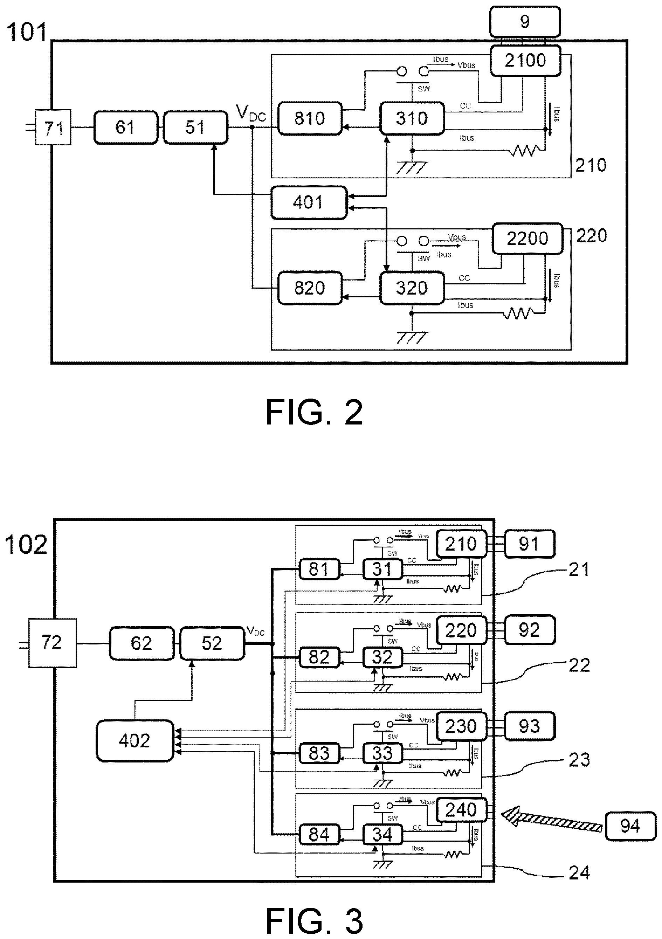

Fig. 2 shows an example of a power supply apparatus (101) of the present invention. A power reception device (9) is connected to the power supply apparatus (101). The power supply apparatus (101) includes two USB ports (210, 220), a master controller (401), an AC/DC converter (51), an EMI filter (61), and a plug (71) for connecting to a power source. The master controller (401) controls the AC/DC converter (51) to generate supplied power for the power supply apparatus (101). The USB port (210) and the USB port (220) have equivalent functions.

APD controller (310), a DC/DC converter (810), and a connector (2100) are disposed in the USB port (210). The PD controller (310) can transmit a control signal to the DC/DC converter (810). The PD controller (310) and the master controller (401) communicate with each other.

A PD controller (320), a DC/DC converter (820), and a connector (2200) are disposed in the USB port (220). The PD controller (320) can transmit a control signal to the DC/DC converter (820). The PD controller (320) and the master controller (401) communicate with each other.

The power reception device (9) is connected to the connector (2100), and the PD controller (310) is capable of communicating with, that is, is connected to the power reception device (9). The connector (2200) is free.

Fig. 3 shows another example of a power supply apparatus (102) of the present invention. Three power reception devices (91, 92, 93) are already connected to the power supply apparatus (102). The power supply apparatus (102) includes four USB ports (21, 22, 23, 24), a master controller (402), an AC/DC converter (52), an EMI filter (62), and a plug (72) for connecting to a power source. The master controller (402) controls the AC/DC converter (52) to generate supplied power for the power supply apparatus (102). The four USB ports (21, 22, 23, 24) have equivalent functions.

APD controller (31), a DC/DC converter (81), and a connector (210) are disposed in the USB port (21). The PD controller (31) can transmit a control signal to the DC/DC converter (81). The PD controller (31) and the master controller (41) communicate with each other. A power reception device (91) is connected to the connector (210), and the PD controller (31) is capable of communicating with, that is, is connected to the power reception device (91).

APD controller (32), a DC/DC converter (82), and a connector (220) are disposed in the USB port (22). The PD controller (32) can transmit a control signal to the DC/DC converter (82). The PD controller (32) and the master controller (42) communicate with each other. A power reception device (92) is connected to the connector (220), and the PD controller (32) is capable of communicating with, that is, is connected to the power reception device (92).

APD controller (33), a DC/DC converter (83), and a connector (230) are disposed in the USB port (23). The PD controller (33) can transmit a control signal to the DC/DC converter (83). The PD controller (33) and the master controller (43) communicate with each other. A power reception device (93) is connected to the connector (230), and the PD controller (33) is capable of communicating with, that is, is connected to the power reception device (93).

A PD controller (324), a DC/DC converter (84), and a connector (240) are disposed in the USB port (24). The PD controller (34) can transmit a control signal to the DC/DC converter (84). The PD controller (34) and the master controller (44) communicate with each other. The connector (240) is free. When a new power reception device (94) is inserted into the connector (240), the PD controller (34) is capable of communicating with, that is, is connected to the power reception device (94) via a cable on a connector (240) side and a cable on a new power reception device (94) side.

In the power supply apparatus and the power supply method of the present invention, in a case where an upper limit value of total supplied power of the power supply apparatus is denoted as Wₘₐₓ, contract power of the power reception device connected to the plurality of USB ports is denoted as Wc, and used power of the power reception device connected to the plurality of USB ports is denoted as Wu, in a state in which N (where N is an integer equal to or greater than 1) power reception devices (D₁ to D_{N}) are connected to the N USB ports (P₁ to P_{N}), the PD controllers (PDC₁ to PDC_{N}), which are respectively connected to the power reception devices (D₁ to D_{N}), notify the master controller of the Wc and the Wu for each of the power reception devices (D₁ to D_{N}).

The notification, which is provided from the PD controllers (PDC₁ to PDC_{N}) to the master controller, is generally repeated at fixed time intervals, preferably at intervals of several minutes, more preferably at intervals of substantially 3 to 10 minutes, unless the power reception device is inserted or removed. The master controller updates the Wc and the Wu each time the notification is provided from the PD controllers (PDC₁ to PDC_{N}).

It is known that the power consumption of the power reception device changes from moment to moment, and there appears a period during which a significantly high amount of power is consumed. A period during which such high power consumption continues is extremely short, but it is repetitive and is observed as spike-like appearing power consumption or pulses with a small duty ratio. It is also known that the frequency of this high power consumption phenomenon hardly affects the operation or charging time of the power reception device. Therefore, when the power consumption of the power reception device is used as a base value for predicting the actual power needs of each power reception device in the near future, the above-described pulse with a small duty ratio has little meaning as an actual power consumption value of the power reception device.

In the present invention, a value obtained by performing a filter process on an actually measured value of the power consumption of the power reception device is used as Wu. Such a filter process generally uses a digital filter, for example, a low-pass filter or a moving average filter as a sinC response filter. In the present invention, preferably, a power value as a moving average value obtained by setting an appropriate moving width is used as Wu. In the present invention, the Wu is utilized as a power value essentially required by the power reception device for an appropriate period from the time of measurement.

For example, in the power supply apparatus (101) shown in Fig. 2, in a state in which one power reception device D₁ (9) is connected, the PD controller: PDC₁ (310), which is connected to the power reception device D₁ (9), notifies the master controller (401) of the Wc and the Wu of the power reception device D₁ (9).

For example, in the power supply apparatus (102) shown in Fig. 3, in a state in which three power reception devices: D₁, D₂, D₃ (91, 92, 93) are connected, the PD controller: PDC₁ (31), which is connected to the power reception device D₁ (91), notifies the master controller (402) of the Wc and the Wu of the power reception device D₁ (91). Similarly, the PD controller: PDC₂ (32) notifies the master controller (402) of the Wc and the Wu of the power reception device D₁₂ (92), and the PD controller: PDC₃ (33) notifies the master controller (402) of the Wc and the Wu of the power reception device D₃ (93). Every time the master controller (402) acquires the Wc and the Wu of each of the three power reception devices (91, 92, 93), the Wc and the Wu are updated to the latest values.

### [(N+1)-th Connection]

One of the most important features of the power supply apparatus and power supply method of the present invention is to start, in a state in which one or more power reception devices are already connected, a negotiation with a newly connected power reception device without requesting a power profile of the newly connected power reception device.

In the power supply apparatus and the power supply method of the present invention, when an (N+1)-th power reception device (D_{N+1}) is connected to a USB port (P_{N+1}) other than the USB ports (P₁ to P_{N}), power supply is started for the power reception device (D_{N+1}) through the following Steps 1, 2, and 3.

Step 1: A PD controller (PDC_{N+1}), which is connected to the USB port (P_{N+1}), transmits a connection signal of the power reception device (D_{N+1}) to the master controller without acquiring a power profile of the power reception device (D_{N+1}).

Step 2: The master controller that has received the connection signal determines maximum power (W_{N+1}) that is capable of being supplied to the power reception device (D_{N+1}) by referring to the Wₘₐₓ, the Wc, and the Wu without acquiring the power profile of the power reception device (D_{N+1}), and transmits the W_{N+1} to the PD controller (PDC_{N+1}).

Step 3: The PD controller (PDC_{N+1}) that has received the W_{N+1} generates a power delivery object (PDO) list based on the W_{N+1} without acquiring the power profile of the power reception device (D_{N+1}), performs a negotiation with the power reception device (D_{N+1}) by using the PDO list, and makes a contract with the power reception device (D_{N+1}).

For example, when the fourth power reception device D₃₊₁ (94) is inserted into the connector (24) of the power supply apparatus (102) shown in Fig. 3, a cable on a USB port (24) side and a cable on a power reception device D₃₊₁ (94) side are connected at the connector (240). Thereafter, in Step 1, the PD controller PDC₃₊₁ (34) transmits a signal for notifying the master controller (401) of the connection of the power reception device D₃₊₁ (94), to the master controller (401). In Step 1, the PD controller PDC₃₊₁ (34) does not request transmission of the power profile from the power reception device D₃₊₁ (94).

In the subsequent Step 2, the master controller (401) determines the maximum power (W₃₊₁) that is capable of being supplied to the power reception device D₃₊₁ (94) by referring to the Wₘₐₓ, the Wc, and the Wu and transmits the W₃₊₁ to the PD controller PDC₃₊₁ (34). Here, the master controller (401) has not acquired the power profile of the power reception device D₃₊₁ (94).

In the subsequent Step 3, the PD controller PDC₃₊₁ (34) that has received the W₃₊₁ generates a power delivery object (PDO) list based on the W₃₊₁. Here, the PD controller PDC₃₊₁ (34) does not request the power profile of the power reception device D₃₊₁ (94). The PDO list Is transmitted to the power reception device D₃₊₁ (94) via the cable of the connector (240), and a negotiation is started between the PD controller PDC₃₊₁ (34) and the power reception device D₃₊₁ (94). As a result of the negotiation, when a contract is made with the power reception device D₃₊₁ to provide the supplied power based on the W₃₊₁, the PD controller PDC₃₊₁ (34) transmits a control signal to a power source circuit including the DC/DC converter (84) to start supplying power to the power reception device (D_{N+1}). At this time, the master controller (402) acquires the contract details between the PD controller PDC₃₊₁ (34) and the power reception device D₃₊₁ (94) from the PD controller PDC₃₊₁ (34).

In the present invention, since it is not necessary to refer to the power profile of the power reception device D_{N+1} for the negotiation with the power reception device D_{N+1}, power can be supplied to wider variety of devices. For example, even a power reception device that cannot transmit an appropriate power profile to a power supply apparatus in the related art can make a negotiation and a contract with the power supply apparatus of the present invention.

Further, since the power supply apparatus of the present invention performs a negotiation with reference to the actual power consumption of the power reception device, it is possible to supply power to any power reception device without making a contract to provide excessive power.

### [Determination and Use of Maximum Power (W_{N+1})]

In Steps 2 and 3, as operations for determining and utilizing the maximum power (W_{N+1}), the following Operations (A), (B), and (C) are allowed.

In the present invention, a value, which is determined as the maximum power where the master controller can make a re-contract with any power reception device, is denoted as "Wrc". "Wrc" is not a notation that means a constant value. When the master controller determines a plurality of Wrcs, two or more of the plurality of Wrcs may be the same, or each of the Wrcs may be different.

Operation (A): Operation (A) is an operation in a case where there is power supply capacity of the power supply apparatus, and is an operation with priority.

In Step 2 of Operation (A), first, when the master controller is notified of the connection of the power reception device D_{N+1}, the master controller determines whether or not Relation (1): (Wₘₐₓ - Wc_{(1toN)}) ≥ Wₘᵢₙ (Wc_{(1toN)} is a sum of the contract powers Wc (Wc₁ to Wc_{N}) of the N power reception devices (D₁ to D_{N}), and Wₘᵢₙ is a minimum supplied power value at the USB port compatible with the USB Type-C standard) is established. According to the USB Type-C standard, the Wₘᵢₙ is 7.5 W.

Relation (1) means that the power supply apparatus has capability to supply a minimum level of power, which is required by the standard, to the power reception device D_{N+1} without making re-contracts with the N power reception devices D₁ to D_{N} that are already connected. The master controller that recognizes the establishment of Relation (1) determines the W_{N+1} by referring to the Wc, the Wu, the [Wₘₐₓ - Wc_{(1toN)}], and the Wₘᵢₙ without acquiring the power profile of the power reception device D_{N+1}, and transmits the W_{N+1} to the PD controller PDC_{N+1}.

Subsequently, in Step 3 of Operation (A), the PD controller PDC_{N+1} that has received the W_{N+1} generates the power delivery object (PDO) list based on the W_{N+1} without acquiring the power profile of the power reception device D_{N+1}. The PD controller PDC_{N+1} performs a negotiation with the power reception device D_{N+1} by using the PDO list and makes a contract with the power reception device D_{N+1}.

Operation (B): Operation (B) is an operation in a case where it is determined that the master controller cannot execute Operation (A).

Operation (B) is an operation of specifying a power reception device where power consumption is sufficiently higher than the contract power and of making a re-contract with the power reception device at lower power to start power supply at a level higher than the level required by the standard to the power reception device D_{N+1}.

In Operation (B), as Step 2, when the master controller detects one power reception device D_{H1} that satisfies Relation (2): (Wc - Wu) ≥ Wₘᵢₙ among the N power reception devices D₁ to D_{N}, the master controller that has received the connection signal determines the maximum power Wrc, which allows a re-contract with the power reception device D_{H1}, and the W_{N+1} by referring to the Wₘₐₓ, the Wc, the Wu, and the Wₘᵢₙ. According to the USB Type-C standard, the Wₘᵢₙ is 7.5 W. The master controller transmits the Wrc to a PD controller PDC_{H1} connected to the power reception device D_{H1}. Further, the master controller transmits the W_{N+1} to the PD controller PDC_{N+1}.

Subsequently, in Step 3 of Operation (B), the PD controller (PDC_{H1}) generates a PDO list based on the received Wrc. The PD controller PDC_{H1} performs a negotiation with the power reception device D_{H1} by using the PDO list and makes a re-contract with the power reception device D_{H1} at a lower power value. As a result of such a re-contract, the power supply apparatus of the present invention becomes capable of supplying power equal to or higher than the minimum level required by the standard to the power reception device D_{N+1}.

On the other hand, the PD controller PDC_{N+1} generates a PDO list based on the received W_{N+1}. The PD controller PDC_{N+1} performs a negotiation with the power reception device D_{N+1} by using the PDO list. Here, the PD controller PDC_{N+1} does not request the power profile of the power reception device D_{N+1}. When the PD controller PDC_{N+1} makes a contract with the power reception device D_{N+1}, power supply to the power reception device D_{N+1} is started.

Operation (C): Operation (C) is an operation in a case where it is determined that the master controller cannot execute both Operation (A) and Operation (B).

Operation (C) is performed when Relation (1) is not established in Step 2 of Operation (A), and when the master controller does not detect a power reception device (D_{H1}) that satisfies Relation (2) among the N power reception devices (D₁ to D_{N}) in Step 2 of Operation (B).

Operation (B) is an operation of specifying a plurality of power reception devices having sufficiently high contract power and of making re-contracts with these power reception devices at lower power to start power supply at a level higher than the level required by the standard to the power reception device D_{N+1}.

In Step 2 of Operation (C), the master controller detects m (where m is an integer that satisfies 1 ≤ m ≤ N) power reception devices D_{H2} that satisfy Relation (3): Wc ≥ (Wₘᵢₙ + Wₘᵢₙ) among the N power reception devices D₁ to D_{N}. The master controller determines maximum power Wrc, which allows a re-contract with the power reception device D_{H2}, and the W_{N+1} by referring to the Wₘₐₓ, the Wc, the Wu, and the Wₘᵢₙ. The master controller can determine the Wrcs with respect to the plurality of power reception devices D_{H2} among the N power reception devices D₁ to D_{N}.

The master controller transmits the Wrc to a PD controller PDC_{H2} connected to the power reception device D_{H2}. Further, the master controller transmits the W_{N+1} to the PD controller PDC_{N+1}.

In the subsequent Step 3 of Operation (C), the PD controller PDC_{H2} generates a PDO list based on the received Wrc. The PD controller PDC_{H2} performs a negotiation with the power reception device D_{H2} by using the PDO list and makes a re-contract with the power reception device (D_{H2}) at a lower power value.

A difference between the contract power before the re-contract with each power reception device (D_{H2}) and the re-contract power, that is, the contract power "taken" from each power reception device (D_{N+1}) may be the same or different for each power reception device D_{H2}. When the contract powers, which are different from each other, are "taken" from each of the power reception devices D_{H2}, in general, a so-called weighting algorithm is executed to calculate a slope of the amount of power to be taken based on the Wc, Wu, and Wₘᵢₙ of each power reception device D_{H2}. Such a weighting algorithm is appropriately designed according to the number of USB ports and the maximum supplied power of the power supply apparatus of the present invention. As a result of such a re-contract, the power supply apparatus of the present invention becomes capable of supplying power equal to or higher than the minimum level required by the standard to the power reception device D_{N+1}.

On the other hand, the PD controller PDC_{N+1} generates a PDO list based on the received W_{N+1}. Here, the PD controller PDC_{N+1} does not request the power profile from the power reception device D_{N+1}. The PD controller PDC_{N+1} performs a negotiation with the power reception device D_{N+1} by using the PDO list and makes a contract with the power reception device D_{N+1}.

### [Re-contract in Accordance with Determination of Maximum Power W_{N+1}]

In the power supply apparatus and power supply method of the present invention, it is also possible to make re-contracts with one or more power reception devices D_{H0}, which are neither the power reception device D_{H1} nor the power reception device D_{H2} among the N power reception devices D₁ to D_{N} already connected and has a contract at surplus power with respect to the actual power consumption, at lower power in any one of the above Operations (A), (B), and (C). With such a re-contract, higher power can be supplied to the new power reception device D_{N+1} even when the maximum suppliable power of the power supply apparatus of the present invention is relatively low.

In the case of Operation (A), the master controller determines whether Relation (1) is established and further searches for at least one power reception device D_{H0} for which Relation (4): Wc > Wu is established. When Relation (1) is established and the master controller detects the power reception device D_{H0}, the power supply apparatus of the present invention makes a re-contract with the power reception device (D_{H0}) at lower power and makes a new contract with the power reception device D_{N+1}.

In Step 2 of Operation (A), the master controller determines the maximum power Wrc, which allows a re-contract with the power reception device D_{H0}, and the W_{N+1}. The master controller transmits the Wrc to a PD controller PDC_{H0} connected to the power reception device D_{H0}. Further, the master controller transmits the W_{N+1} to the PD controller PDC_{N+1}.

In the subsequent Step 3 of Operation (A), the PD controller PDC_{H0} generates a PDO list based on the received Wrc. The PD controller PDC_{H0} performs a negotiation with the power reception device D_{H0} by using the PDO list and makes a re-contract with the power reception device D_{H0} at a lower power value.

On the other hand, the PD controller PDC_{N+1} generates a PDO list based on the received W_{N+1} without acquiring the power profile of the power reception device D_{N+1}. The PD controller PDC_{N+1} performs a negotiation with the power reception device D_{N+1} by using the PDO list and makes a contract with the power reception device D_{N+1}.

In this Operation (A), an attempt is made to make a re-contract with the power reception device D_{H0} even when the contracted power has a relatively large redundancy. With such Operation (A), surplus contract power can be reduced compared to the actual power consumption, and higher power can be distributed to the new power reception device D_{N+1}. As a result, high-speed charging of the power reception device D_{N+1} connected late is enabled.

In the case of Operation (B), the master controller searches for one power reception device D_{H1} that satisfies Relation (2) and further searches for at least one power reception device D_{H0} for which Relation (4): Wc > Wu is established. When the power reception device D_{H1} is detected and the power reception device D_{H0} is further detected, the power supply apparatus of the present invention makes re-contracts with the power reception devices D_{H0} and D_{H1} at lower power and further makes a contract with the power reception device D_{N+1}.

In Step 2 of Operation (B), the master controller determines the maximum power Wrc which allows a re-contract with the power reception device D_{H0} and the maximum power Wrc which allows a re-contract with the power reception device D_{H1}, and further determines the W_{N+1}.

Thereafter, the master controller transmits the Wrc to the PD controller PDC_{H0}, which is connected to the power reception device D_{H0}, and transmits the Wrc to the PD controller PDC_{H1}, which is connected to the power reception device D_{H1}. Further, the master controller transmits the W_{N+1} to the PD controller PDC_{N+}).

In the subsequent Step 3 of Operation (B), the PD controller PDC_{H0} generates a PDO list based on the received Wrc. The PD controller PDC_{H0} performs a negotiation with the power reception device D_{H0} by using the PDO list and makes a re-contract with the power reception device D_{H0} at a lower power value.

On the other hand, the PD controller PDC_{H1} generates a PDO list based on the received Wrc. The PD controller PDC_{H1} performs a negotiation with the power reception device D_{H1} by using the PDO list and makes a re-contract with the power reception device D_{H1} at a lower power value.

Further, on the other hand, the PD controller PDC_{N+1} generates a PDO list based on the received W_{N+1} without acquiring the power profile of the power reception device D_{N+1}. The PD controller PDC_{N+1} performs a negotiation with the power reception device D_{N+1} by using the PDO list and makes a contract with the power reception device D_{N+1}.

In this Operation (B), even when it is possible to supply power to the new power reception device D_{N+1} by making a re-contract with one already connected power reception device D_{H1}, an attempt is made to make a re-contract with another power reception device D_{H0}. With such Operation (B), surplus contract power can be reduced compared to the actual power consumption, and higher power can be distributed to the new power reception device D_{N+1}. As a result, high-speed charging of the power reception device D_{N+1} connected late is enabled.

In the case of Operation (C), the master controller searches for one power reception device D_{H2} that satisfies Relation (3) and further searches for at least one power reception device D_{H0} for which Relation (4): Wc > Wu is established. When the power reception device D_{H2} is detected and the power reception device D_{H0} is further detected, the power supply apparatus of the present invention makes re-contracts with the power reception devices D_{H0} and D_{H2} at lower power and further makes a contract with the power reception device D_{N+1}.

In Step 2 of Operation (C), the master controller determines the maximum power Wrc which allows a re-contract with the power reception device D_{H0}, the maximum power Wrc which allows a re-contract with the power reception device D_{H2}, and the W_{N+1}.

The master controller transmits the Wrc to a PD controller PDC_{H0} connected to the power reception device D_{H0}. Further, the master controller transmits the Wrc to a PD controller PDC_{H2} connected to the power reception device D_{H2}. Further, the master controller transmits the W_{N+1} to the PD controller PDC_{N+1}.

In the subsequent Step 3 of Operation (C), the PD controller (PDC_{H0}) generates a PDO list based on the received Wrc. The PD controller PDC_{H0} performs a negotiation with the power reception device D_{H0} by using the PDO list and makes a re-contract with the power reception device D_{H0} at a lower power value.

On the other hand, the PD controller PDC_{H2} generates a PDO list based on the received Wrc. The PD controller PDC_{H2} performs a negotiation with the power reception device D_{H2} by using the PDO list and makes a re-contract with the power reception device D_{H2} at a lower power value.

Further, on the other hand, the PD controller PDC_{N+1} generates a PDO list based on the received W_{N+1} without acquiring the power profile of the power reception device D_{N+1}. The PD controller PDC_{N+1} performs a negotiation with the power reception device D_{N+1} by using the PDO list and makes a contract with the power reception device D_{N+1}.

In this Operation (C), even when it is possible to supply power to the new power reception device D_{N+1} by making a re-contract with the power reception device D_{H2} at a lower power value, an attempt is made to make a re-contract with the power reception device D_{H0}. With such Operation (C), surplus contract power can be reduced compared to the actual power consumption, and higher power can be distributed to the new power reception device D_{N+1}. As a result, high-speed charging of the power reception device D_{N+1} connected late is enabled.

For example, in a case where Operation (A) is performed on the power supply apparatus (102) shown in Fig. 3, even when Relation (1) is established, the master controller (402) searches for the power reception device D_{H0} from among the power reception device D₁ (91), the power reception device D₂ (92), and the power reception device D₃ (93).

In a case where Operation (B) is performed on the power supply apparatus (102) shown in Fig. 3, for example, even when the power reception device D₁ (91) corresponds to the power reception device (D_{H1}), the master controller (402) determines whether or not one of the power reception devices D₂ (92) and D₃ (93) corresponds to the power reception device (D_{H0}).

In a case where Operation (C) is performed on the power supply apparatus (102) shown in Fig. 3, for example, even when the power reception devices D₁ (91) and D₂ (92) correspond to the power reception device (D_{H1}), the master controller (402) determines whether or not the power reception device D₃ (93) corresponds to the power reception device (D_{H0}).

### [Re-contract after (N+1) Connections are Made]

In the present invention, after the power supply to the power reception device D_{N+1} is started, it is possible to repeatedly make a re-contract with the connected power reception device in order to eliminate the surplus contract power in a state in which the power reception device is not inserted or removed.

In the present invention, after the power supply to the power reception device D_{N+1} is started, the PD controllers PDC₁ to PDC_{N+1}, which are respectively connected to the power reception devices D₁ to D_{N+1}, notify the master controller of the Wc and Wu for each of the power reception devices D₁ to D_{N+1} in a state in which (N+1) power reception devices D₁ to D_{N+1} are connected to (N+1) USB ports P₁ to P_{N+1} and perform the following Steps 4, 5, and 6.

Step 4: The master controller determines whether or not Relation (5): Wc > Wu is established for each of the power reception devices D₁ to D_{N+1}.

When none of the power reception devices D₁ to D_{N+1} that satisfies Relation (5) is detected, the master controller does not proceed to next Step 5 and waits for the next notification from the PD controllers PDC₁ to PDC_{N+1}. When one or more power reception devices Dₕ that satisfy Relation (5) are detected, the master controller proceeds to next Step 5.

Step 5: The master controller determines the maximum power Wrc which allows a re-contract with the power reception device Dₕ by referring to the Wₘₐₓ, the Wc, the Wu, and the Wₘᵢₙ and transmits the maximum power Wrc to a PD controller PDCₕ connected to the power reception device Dₕ.

Step 6: The PD controller (PDCₕ) generates a PDO list based on the received Wrc, performs a negotiation with the power reception device Dₕ by using the PDO list, and makes a re-contract with the power reception device Dₕ at a lower power value.

In the re-contract after Steps 4, 5, and 6, it is also possible to make re-contracts with one or more power reception devices D_{L}, among the power reception devices D₁ to D_{N+1}, other than the power reception device Dₕ at higher power.

In this case, in Step 5, the master controller determines the maximum power Wrc which allows a re-contract with the power reception device Dₕ by referring to the Wₘₐₓ, the Wc, the Wu, and the Wₘᵢₙ, and further determines the maximum power Wrc which allows a re-contract with at least one power reception device D_{L} other than the power reception device Dₕ. Thereafter, the master controller transmits the Wrc to the PD controller PDCₕ connected to the power reception device Dₕ. Further, the master controller transmits the Wrc to the PD controller PDC_{L} connected to the power reception device D_{L}.

Subsequently, in Step 6, the PD controller PDCₕ generates a PDO list based on the received Wrc. The PD controller PDCₕ performs a negotiation with the power reception device Dₕ by using the PDO list and makes a re-contract with the power reception device Dₕ at a lower power value.

On the other hand, the PD controller PDC_{L} generates a PDO list based on the received Wrc. The PD controller PDC_{L} performs a negotiation with the power reception device D_{L} by using the PDO list and makes a re-contract with the power reception device D_{L} at a higher power value.

The power reception device D_{L} is typically a power reception device where a contract is made later. For example, when the power reception device D_{N+1} is made a contract with the power supply apparatus of the present invention at the minimum power required by the standard through the above Steps 1, 2, and 3, Steps 4, 5, and 6 are executed after a fixed time interval from the start of the power supply to the power reception device D_{N+1}. As a result, the contract power of the power reception device Dₕ, which is detected among the power reception devices D₁ to D_{N}, can be "taken" and "added" to the contract power of the power reception device D_{N+1}.

Further, for example, when the power reception device D_{N} and then the power reception device D_{N+1} are made contracts with the power supply apparatus of the present invention at relatively low power through the above Steps 1, 2, and 3, and when the charging of the power reception device D_{N+1} progresses rapidly, a small portion of the power allocated to the power reception device D_{N+1} may be consumed. In this case, the power reception device D_{N+1} is handled as the above power reception device Dₕ, and the contract power of the power reception device D_{N+1} can be "taken" and "added" to the contract power of the power reception device D_{N}.

In the present invention, generally, Steps 4, 5, and 6 are repeated in this order unless the power reception device is inserted or removed. In this case, Step 4 is preferably performed at fixed time intervals, and more preferably Step 4 is performed at intervals of 3 to 10 minutes.

### [Adaptation to USB Type-C Standard]

The power supply apparatus and the power supply method of the present invention can comply with the USB Type-C standard by executing Steps 1, 2, and 3 and further executing Steps 4, 5, and 6 described above.

Devices compatible with the USB Type-C standard are still in the process of spreading, and the qualities or performances of these devices supplied to the market are not necessarily constant. In the present invention, by using the technique of not acquiring the power profile of the power reception device D_{N+1} before a negotiation of the power reception device D_{N+1} is started, power supply can be implemented relatively reliably even for such a device.

### [PD Controller and Master Controller]

In view of the various operation patterns described above, it is understood that in the present invention, the plurality of PD controllers and the master controller clearly share roles. In the present invention, respective PD controllers are independent each other, and the master controller and the PD controller are in a kind of master/slave relationship. The PD controller notifies the master controller of various information on the power reception devices that the PD controller can connect to, for example, the presence or absence of connection, contract details, power consumption, the presence or absence of errors, or the like, and does not have a function of controlling power distribution to the plurality of power reception devices. Although the master controller has the function of controlling power distribution to the plurality of power reception devices, the master controller does not perform an operation of performing a negotiation and making a contract with each power reception device. That is, the PD controller independently watches each power reception device and reports the result to the master controller, and the master controller generates the most efficient power distribution based on the reports. The contract/re-contract between each PD controller and each power reception device is based on the most efficient power distribution.

### [Examples]

### [Example 1]

Example 1 is an example of adopting Operation (A) in the power supply apparatus (102) shown in Fig. 3. In Example 1, the following Steps 1, 2, and 3 are performed.

### (Step 1)

When the power reception device: D₃₊₁ (94) is inserted into the connector (240) of the USB port (24), the PD controller: PDC₃₊₁ (34) transmits a connection signal of the power reception device: D₃₊₁ (94) to the master controller (402) without acquiring the power profile of the power reception device: D₃₊₁ (94).

### (Step 2)

The master controller (402) stores Wₘₐₓ: 100 W, Wc: 15 W of the power reception device: D₁ (91), Wc: 27 W of the power reception device: D₂ (92), Wc: 45 W of the power reception device: D₃ (93). The master controller (402) generates 87 W as the Wc₍₁ₜₒ₃₎ and determines that Relation (1): (Wₘₐₓ - Wc_{(1toN)}) ≥ Wₘᵢₙ ((100 - 87) > 7.5) is established. The master controller (402) determines that the USB port (24) is capable of supplying power of 5 V/1.5 A or more required by the USB Type-C standard and transmits the determination result to the PD controller (34). The PD controller (34) immediately transmits a control signal to a converter (84) and outputs 5 V with respect to the USB port (24).

Next, the master controller (402) detects that Relation (4): Wc > Wu is established for the power reception device (93). The master controller (402) handles the power reception device (93) as the power reception device D_{H0} and determines the maximum power Wrc which allows a re-contract with the power reception device (93). The Wrc determined here is lower than 45 W, which is the Wrc of the power reception device (93). The master controller (402) transmits the Wrc to the PD controller (33).

Furthermore, the master controller (402) determines the maximum power W₃₊₁ where a contract can be made with the power reception device: D₃₊₁ (94) by referring to the Wc, the Wu, the [Wₘₐₓ - Wc_{(1toN)}], and Wₘᵢₙ. The master controller (402) transmits the W₃₊₁ to the PD controller (34).

### (Step 3)

The PD controller (33) generates a PDO list by using the received Wrc, performs a negotiation with the power reception device (93), and makes a re-contract with the power reception device (93) at a power lower than 45 W. On the other hand, the PD controller (34) generates a PDO list by using the received W₃₊₁ without acquiring the power profile of the power reception device (94), performs a negotiation with the power reception device (94), and makes a contract with the power reception device (94). In this way, power supply to the power reception device (94) is started.

### [Example 2-1: Step 1/Operation Flow]

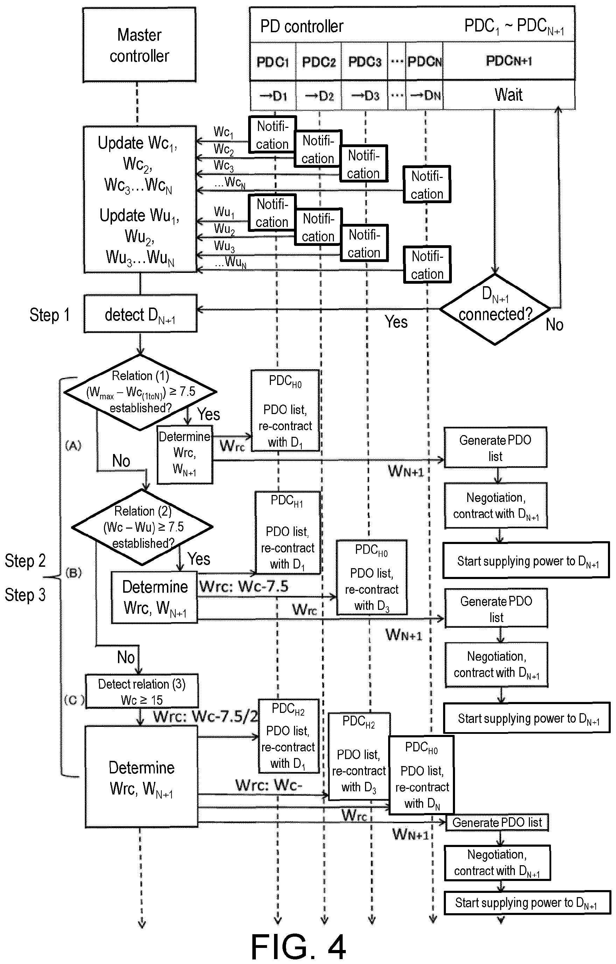

Fig. 4 shows how Step 1 is started in the power supply apparatus and the power supply method of the present invention.

N power reception devices are connected to the power reception device of the present invention. During a period when there is no new insertion or removal of the power reception device, the master controller periodically receives the contract power Wc and the used power Wu of each power reception device from each PD controller to which the power reception device is connected, and updates the contract power Wc and the used power Wu of each power reception device.

In this state, when the power reception device D_{N+1} is inserted into the PD controller PDC_{N+ 1}, in Step 1, the PD controller PDC_{N+1} notifies the master controller of a connection signal of the power reception device D_{N+1}, and the master controller detects the connection of the power reception device D_{N+1}.

### [Example 2-2: Steps 2 and 3/Operation Flow]

Fig. 4 shows an operation of making a new contract with the power reception device D_{N+1} after making a re-contract with the power reception device D₁.

In Step 2, when the master controller detects that Relation (1): (Wₘₐₓ - Wc_{(1toN)}) ≥ (Wₘᵢₙ: 7.5 W) is established by referring to the stored contract power Wc, the used power Wu, or the like of each power reception device, Operation (A) is executed. That is, the PD controller PDC_{N+1} can generate the lowest power (5 V) to the USB port P_{N+1} in accordance with the notification from the master controller.

On the other hand, when the master controller detects the power reception device D₁ as the power reception device D_{H0} for which a contract is made at the surplus power and Relation (4): Wc > Wu is established by referring to the stored contract power Wc, used power Wu, Wₘₐₓ, or the like of each power reception device, the master controller determines Wrc which allows a re-contract with the power reception device D₁ and the maximum power W_{N+1} that can be supplied to the power reception device D_{N+1}. The master controller notifies the PD controller PDC₁ of the power value Wrc and notifies the PD controller PDC_{N+1} of the power value W_{N+1}.

In the subsequent Step 3, the CPD controller PDC₁, as the PD controller PDC_{H0}, generates a PDO list by using the received power value Wrc, and performs a negotiation and makes a re-contract with the power reception device D₁ as the power reception device D_{H0}. As a result, the contract power of the power reception device D₁ is reduced.

On the other hand, the PD controller PDC_{N+1} generates a PDO list by using the received power value W_{N+1}, and performs a negotiation and makes a contract with the power reception device D_{N+1}. As a result, power supply to the power reception device D_{N+1} is started.

### [Example 2-3: Steps 2 and 3/Operation Flow]

Fig. 4 shows an operation of making a new contract with the power reception device D_{N+1} after making re-contracts with the power reception devices D₁ and D₃.

In Step 2, when the master controller detects the power reception device D₁ as the power reception device D_{H1} that satisfies Relation (2): (Wc - Wu) ≥ (Wₘᵢₙ: 7.5 W) without detecting the establishment of Relation (1): (Wₘₐₓ - Wc_{(1toN)}) ≥ (Wₘᵢₙ: 7.5 W) by referring to the stored contract power Wc, used power Wu, or the like of each power reception device, Operation (B) is executed.

When the master controller further detects the power reception device D₃ as the power reception device D_{H0} for which a contract is made at surplus power and Relation (4): Wc > Wu is established, the master controller determines Wrc which allows a re-contract with the power reception device D₁ and Wrc which allows a re-contract with the power reception device D₃. Further, the master controller determines the maximum power W_{N+1} that can be supplied to the power reception device D_{N+1}. The master controller transmits the power value Wrc to the PD controller PDC₁ as the PD controller PDC_{H1} and the PD controller PDC₃ as the PD controller PDC_{H0} and transmits the power value W_{N+1} to the PD controller PDC_{N+1}.

In the subsequent Step 3, the PD controller PDC₁, as the PD controller PDC_{H1}, generates a PDO list by using the received power value Wrc, and performs a negotiation and makes a re-contract with the power reception device D₁ as the power reception device D_{H1}. As a result, the contract power of the power reception device D₁ is reduced by at least 7.5 W.

On the other hand, the PD controller PDC₃ generates a PDO list by using the received power value Wrc, and performs a negotiation and makes a re-contract with the power reception device D₃ as the power reception device D_{H0}. As a result, the contract power of the power reception device D₃ is reduced.

Thereafter, the PD controller PDC_{N+1} generates a PDO list by using the received power value W_{N+1}, and performs a negotiation and makes a contract with the power reception device D_{N+1}. A contract is made with the power reception device D_{N+1} at a power of 7,5 W or more as required by the standard. As a result, power supply to the power reception device D_{N+1} is started.

### [Example 2-4: Steps 2 and 3/Operation Flow]

Fig. 4 shows an operation of making a new contract with the power reception device D_{N+1} after making re-contracts with the power reception devices D₁, D₃, and D_{N}.

In Step 2, when the master controller does not detect the establishment of Relation (1) and does not detect the power reception device D_{H1} that satisfies Relation (2) by referring to the stored contract power Wc, used power Wu, or the like of each power reception device, Operation (C) proceeds. In this example, the master controller detects the power reception device D₁ and the power reception device D₃ as the power reception devices D_{H2} that satisfy Relation (3): Wc ≥ (Wₘᵢₙ + Wₘᵢₙ) (where Wₘᵢₙ is 7.5 W) and further detects the power reception device D_{N} as the power reception device D_{H0} for which a contract is made at surplus power and Relation (4): Wc > Wu is established.

The master controller determines Wrc where re-contracts can be made with each of the power reception devices D_{H2} (the power reception devices D₁ and D₃) and the power reception device D_{H0} (D_{N}). Further, the master controller determines the maximum power W_{N+1} that can be supplied to the power reception device D_{N+1}. The master controller transmits the power values Wrc to the PD controllers PDC₁ and PDC₃ and transmits the power value W_{N+1} to the PD controller PDC_{N+1}.

In the subsequent Step 3, the PD controller PDC₁, as the PD controller PDC_{H2}, generates a PDO list by using the received power value Wrc, and performs a negotiation and makes a re-contract with the power reception device D₁ as the power reception device D_{H2}.

On the other hand, the PD controller PDC₃, as the PD controller PDC_{H2}, generates a PDO list by using the received power value Wrc, and performs a negotiation and makes a re-contract with the power reception device D₃ as the power reception device D_{H2}. As a result, the sum of the re-contract powers of the power reception devices D₁ and D₃ is at least 7.5 W lower than the previous contract value.

On the other hand, the PD controller PDC_{N} generates a PDO list by using the received power value Wrc, and performs a negotiation and makes a re-contract with the power reception device D_{N} as the power reception device D_{H0}. As a result, the contract power of the power reception device D_{N} is reduced. As a result, it becomes possible to make a contract for the USB port P_{N+1} at a level higher than that required by the standard.

Thereafter, the PD controller PDC_{N+1} generates a PDO list by using the received power value W_{N+1}, and performs a negotiation and makes a contract with the power reception device D_{N+1}. As a result, power supply to the power reception device D_{N+1} is started.

### [Example 3-1: Steps 4, 5, and 6/Operation Flow]

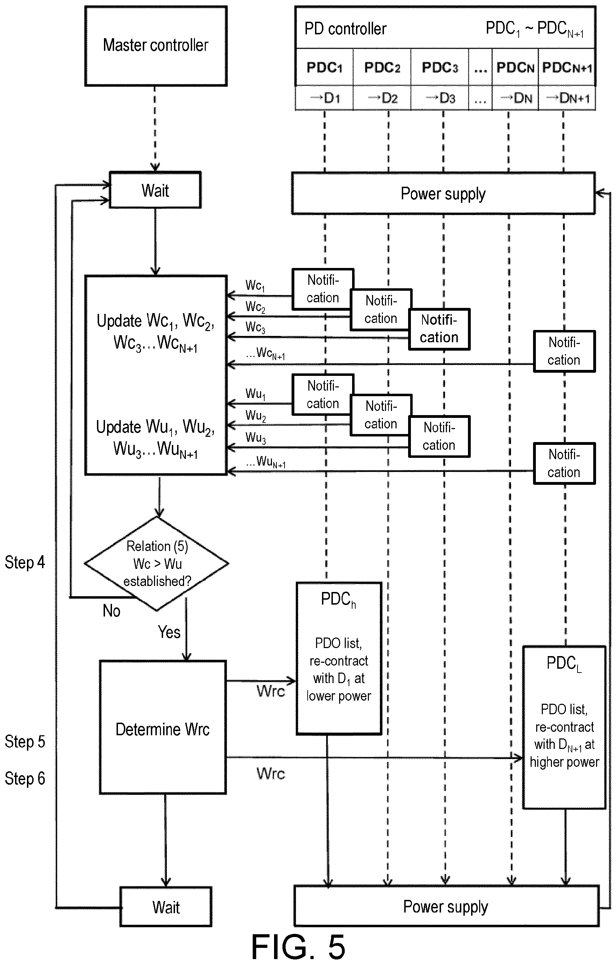

Fig. 5 shows an example of a flow where a PD controller makes a re-contract with a power reception device during a period when there is no insertion or removal of the power reception device after the power supply to the power reception device D_{N+1} is started. In the flow shown in Fig. 5, by making a re-contract, surplus power is taken from the first connected power reception device D₁ to increase the contract power of the last connected power reception device D_{N+1}.

In Step 4, the master controller discovers the power reception device Dₕ, for which a contract is made at surplus power and Relation (5): Wc > Wu is established, by referring to notification information from the PD controller. In this example, the power reception device Dₕ is the first connected power reception device D₁.

In the subsequent Step 5, the master controller determines the maximum power Wrc which allows a re-contract with the power reception device D₁ by referring to each power value acquired from the PD controller and transmits the maximum power Wrc to the PD controller PDC₁ connected to the power reception device D₁. At this time, a contract is made with the last connected power reception device D_{N+1} at the minimum level required by the standard. Therefore, the master controller determines the maximum power Wrc which allows a re-contract with the power reception device D_{N+1} and transmits the maximum power Wrc to the PD controller PDC_{N+1} connected to the power reception device D_{N+1}.

In the subsequent Step 6, the PD controller PDC₁ generates a PDO list by using the received power value Wrc, and performs a negotiation and makes a re-contract with the power reception device D₁ as the power reception device Dₕ. As a result, the contract power of the power reception device D₁ is reduced. On the other hand, the PD controller PDC_{N+1} generates a PDO list by using the received power value Wrc, and performs a negotiation and makes a re-contract with the power reception device D_{N+1} as the power reception device D_{L}. As a result, the contract power of the power reception device D_{N+1} is increased.

In this way, the surplus contract power allocated to the power reception device D₁ is transferred to the last connected power reception device D_{N+1}. After a fixed time interval, for example, 5 minutes after the start of Step 4, Step 4 is executed again, and a re-contract flow consisting of Steps 4, 5, and 6 is repeated. When the master controller does not detect the power reception device Dₕ for which a contract is made at surplus power in Step 4, the master controller does not perform Step 5 and waits until the next Step 4.

### [Example 3-2: Steps 4, 5, and 6/Operation Flow]

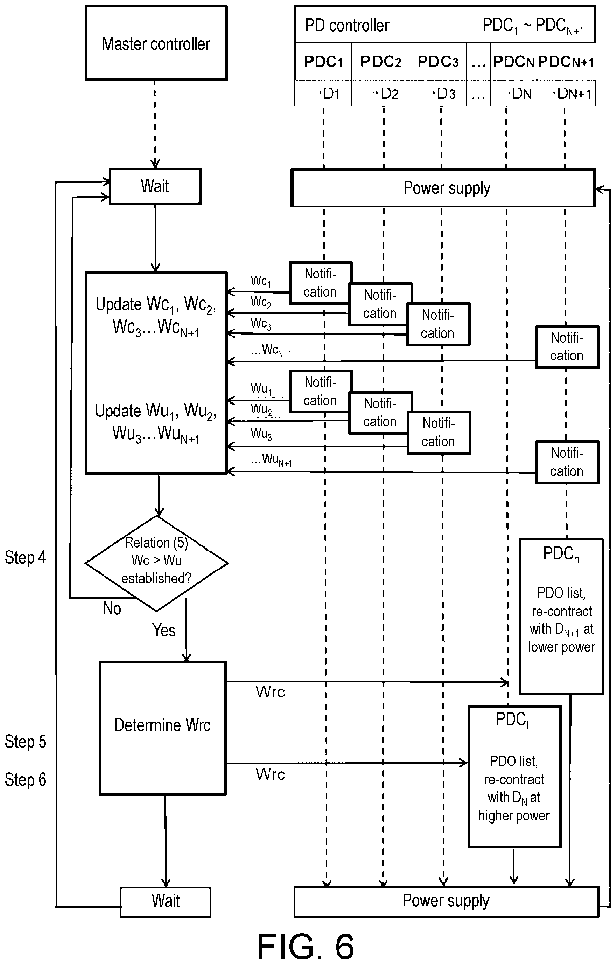

Fig. 6 shows another example of a flow where a PD controller makes a re-contract with a power reception device during a period when there is no insertion or removal of the power reception device after the power supply to the power reception device D_{N+1} is started. In the flow shown in Fig. 6, by making a re-contract, surplus power is taken from the last connected power reception device D_{N+1} to increase the contract power of the power reception device D_{N} connected before the power reception device D_{N+1}.

The master controller discovers the power reception device Dₕ for which a contract is made at surplus power and Relation (5): Wc > Wu is established by referring to notification information from the PD controller. In this example, the power reception device Dₕ is the last connected power reception device D_{N+1}.

In the subsequent Step 5, the master controller determines the maximum power Wrc which allows a re-contract with the power reception device D_{N+1} by referring to each power value acquired from the PD controller and transmits the maximum power Wrc to the PD controller PDC_{N+1} connected to the power reception device D_{N+1}. At this time, a contract is made with the power reception device D_{N} connected before the power reception device D_{N+1} at the minimum level required by the standard. Therefore, the master controller determines the maximum power Wrc which allows a re-contract with the power reception device D_{N} and transmits the maximum power Wrc to the PD controller PDC_{N} connected to the power reception device D_{N}.

In the subsequent Step 6, the PD controller PDC_{N+1} generates a PDO list by using the received power value Wrc, and performs a negotiation and makes a re-contract with the power reception device D_{N+1} as the power reception device Dₕ. As a result, the contract power of the power reception device D_{N+1} is reduced. On the other hand, the PD controller PDC_{N} generates a PDO list by using the received power value Wrc, and performs a negotiation and makes a re-contract with the power reception device D_{N} as the power reception device D_{L}. As a result, the contract power of the power reception device D_{N} is increased.

In this way, the surplus contract power allocated to the power reception device D_{N+1} is transferred to the power reception device D_{N}, and then power supply to the power reception device continues. After a fixed time interval, for example, 5 minutes after the start of Step 4, Step 4 is executed again, and a re-contract flow consisting of Steps 4, 5, and 6 is repeated. When the master controller does not detect the power reception device Dₕ for which a contract is made at surplus power in Step 4, the master controller does not perform Step 5 and waits until the next Step 4.

### Industrial Applicability

By using a power supply apparatus and a power supply method of the present invention, it is possible to easily supply power to power reception devices having variations in quality and performance, and many devices can be charged in a short time even when an output of the power supply apparatus is limited. According to the present invention, it is possible to implement a power supply system that is smaller, lower in cost, highly versatile, and has improved power supply efficiency.

The present invention as described above can be applied to various electrical and electronic devices utilizing the USB-PD standard, particularly the USB Type-C standard. For example, it is expected that the power supply apparatus and the power supply method of the present invention can be applied to a charger used for a PC, a tablet, a smartphone, a smartwatch, or the like or a power system installed in a large machine such as transportation equipment, a vehicle, and an aircraft.

### Reference Signs List

1: power supply apparatus
101: power supply apparatus
102: power supply apparatus
2: USB port
3: PD controller
31, 32, 33, 34: PD controller
310, 320: PD controller
4: master controller
401: master controller
402: master controller
51: AC/DC converter
52: AC/DC converter
61: EMI filter
62: EMI filter
71: plug
72: plug
81, 82, 83, 84: DC/DC converter
810, 820: DC/DC converter
9: power reception device
91, 92, 93, 94: power reception device
1000: power source circuit

## Claims

1. A power supply apparatus comprising:
a plurality of USB ports compatible with a USB-PD standard;
a plurality of PD controllers; and
a master controller,
wherein the PD controller is disposed in each of the plurality of USB ports and the master controller is capable of communicating with each of the plurality of PD controllers,
in a case where an upper limit value of total supplied power of the power supply apparatus is denoted as Wₘₐₓ, contract power of a power reception device connected to the plurality of USB ports is denoted as Wc, and used power of the power reception device connected to the plurality of USB ports is denoted as Wu (where the Wu is a value obtained by performing a filter process on an actually measured value of power consumption of the power reception device),
in a state in which N (where N is an integer equal to or greater than 1) power reception devices (D₁ to D_{N}) are connected to N USB ports (P₁ to P_{N}), the PD controllers (PDC₁ to PDC_{N}), which are respectively connected to the power reception devices (D₁ to D_{N}), notify the master controller of the Wc and the Wu for each of the power reception devices (D₁ to D_{N}), and
power supply is started when an (N+1)-th power reception device (D_{N+1}) is connected to a USB port (P_{N+1}) other than the USB ports (P₁ to P_{N}), for the power reception device (D_{N+1}) through the following Steps 1, 2, and 3,
Step 1:
a PD controller (PDC_{N+1}) connected to the USB port (P_{N+1}) transmits a connection signal of the power reception device (D_{N+1}) to the master controller without acquiring a power profile of the power reception device (D_{N+1}),
Step 2:
the master controller that has received the connection signal determines maximum power (W_{N+1}) that is capable of being supplied to the power reception device (D_{N+1}) by referring to the Wₘₐₓ, the Wc, and the Wu without acquiring the power profile of the power reception device (D_{N+1}) and transmits the W_{N+1} to the PD controller (PDC_{N+1}),
Step 3:
the PD controller (PDC_{N+1}) that has received the W_{N+1} generates a power delivery object (PDO) list based on the W_{N+1} without acquiring the power profile of the power reception device (D_{N+1}), performs a negotiation with the power reception device (D_{N+1}) by using the PDO list, and makes a contract with the power reception device (D_{N+1}).

2. The power supply apparatus according to Claim 1,
wherein in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is established, the master controller that has received the connection signal determines the W_{N+1} by referring to the Wc, the Wu, the [Wₘₐₓ - Wc_{(1toN)}], and the Wₘᵢₙ without acquiring the power profile of the power reception device (D_{N+1}) and transmits the W_{N+1} to the PD controller (PDC_{N+1}), and
in the Step 3, the PD controller (PDC_{N+1}) that has received the W_{N+1} generates a power delivery object (PDO) list based on the W_{N+1} without acquiring the power profile of the power reception device (D_{N+1}), performs a negotiation with the power reception device (D_{N+1}) by using the PDO list, and makes a contract with the power reception device (D_{N+1}).

3. The power supply apparatus according to Claim 2,
wherein in the Step 2, in a case where the master controller that has received the connection signal detects at least one power reception device (D_{H0}) for which Relation (4): Wc > Wu is established among the power reception devices (D₁ to D_{N}) by referring to the Wc, the Wu, the [Wₘₐₓ - Wc_{(1toN)}], and the Wₘᵢₙ,
the master controller
determines maximum power (Wrc), which allows a re-contract with the power reception device (D_{H0}), and the W_{N+1},
transmits the Wrc to a PD controller (PDC_{H0}) disposed at the USB port of the power reception device (D_{H0}), and
transmits the W_{N+1} to the PD controller (PDC_{N+1}), and
in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value, and
the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

4. The power supply apparatus according to Claim 1,
wherein in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is not established and the master controller detects one power reception device (D_{H1}), among the N power reception devices (D₁ to D_{N}), that satisfies Relation (2): (Wc - Wu) ≥ Wₘᵢₙ,
the master controller that has received the connection signal
determines maximum power (Wrc), which allows a re-contract with the power reception device (D_{H1}), and the W_{N+1} by referring to the Wₘₐₓ, the Wc, the Wu, and the Wₘᵢₙ,
transmits the Wrc to a PD controller (PDC_{H1}) connected to the power reception device (D_{H1}), and
transmits the W_{N+1} to the PD controller (PDC_{N+1}), and
in the Step 3, the PD controller (PDC_{H1}) that has received the Wrc generates a PDO list based on the Wrc, performs a negotiation with the power reception device (D_{H1}) by using the PDO list, and makes a re-contract with the power reception device (D_{H1}) at a lower power value, and
the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

5. The power supply apparatus according to Claim 4,
wherein in the Step 2, in a case where the master controller that has received the connection signal detects at least one power reception device (D_{H0}) other than the power reception device (D_{H1}) for which Relation (4): Wc > Wu is established among the power reception devices (D₁ to D_{N}) by referring to the Wₘₐₓ, the Wc, the Wu, and the Wₘᵢₙ,
the master controller
determines maximum power (Wrc) which allows a re-contract with the power reception device (D_{H0}), the maximum power (Wrc) which allows a re-contract with the power reception device (D_{H1}), and the W_{N+1},
transmits the Wrc to a PD controller (PDC_{H0}) connected to the power reception device (D_{H0}),
transmits the Wrc to the PD controller (PDC_{H1}) connected to the power reception device (D_{H1}), and
transmits the W_{N+1} to the PD controller (PDC_{N+1}), and
in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value,
the PD controller (PDC_{H1}) that has received the Wrc generates a PDO list based on the Wrc, performs a negotiation with the power reception device (D_{H1}) by using the PDO list, and makes a re-contract with the power reception device (D_{H1}) at a lower power value, and
the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

6. The power supply apparatus according to Claim 1,
wherein in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is not established and the master controller does not detect one power reception device (D_{H1}), among the N power reception devices (D₁ to D_{N}), that satisfies Relation (2): (Wc - Wu) >_ Wmin,
the master controller detects m (where m is an integer that satisfies 1 ≤ m ≤ N) power reception devices (D_{H2}), among the N power reception devices (D₁ to D_{N}), that satisfy Relation (3): Wc ≥ (Wₘᵢₙ + Wₘᵢₙ), and
the master controller that has received the connection signal
determines maximum power (Wrc), which allows a re-contract with the power reception device (D_{H2}), and the W_{N+1} by referring to the Wₘₐₓ, the Wc, the Wu, and the Wₘᵢₙ,
transmits the Wrc to a PD controller (PDC_{H2}) connected to the power reception device (D_{H2}), and
transmits the W_{N+1} to the PD controller (PDC_{N+1}), and
in the Step 3, the PD controller (PDC_{H2}) that has received the Wrc generates a PDO list based on the Wrc, performs a negotiation with the power reception device (D_{H2}) by using the PDO list, and makes a re-contract with the power reception device (D_{H2}) at a lower power value, and
the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

7. The power supply apparatus according to Claim 6,
wherein in the Step 2, in a case where the master controller that has received the connection signal detects at least one power reception device (D_{H0}) other than the power reception device (D_{H1}) for which Relation (4): Wc > Wu is established among the power reception devices (D₁ to D_{N}) by referring to the Wₘₐₓ, the Wc, the Wu, and the Wₘᵢₙ,
the master controller
determines maximum power (Wrc) which allows a re-contract with the power reception device (D_{H0}), the maximum power (Wrc) which allows a re-contract with the power reception device (D_{H2}), and the W_{N+1},
transmits the Wrc to a PD controller (PDC_{H0}) connected to the power reception device (D_{H0}),
transmits the Wrc to the PD controller (PDC_{H2}) connected to the power reception device (D_{H2}), and
transmits the W_{N+1} to the PD controller (PDC_{N+1}), and
in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value,
the PD controller (PDC_{H2}) that has received the Wrc generates a PDO list based on the Wrc, performs a negotiation with the power reception device (D_{H2}) by using the PDO list, and makes a re-contract with the power reception device (D_{H2}) at a lower power value, and
the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

8. The power supply apparatus according to Claim 1,
wherein after the power supply to the power reception device (D_{N+1}) is started, in a state in which (N+1) power reception devices (D₁ to D_{N+1}) are connected to (N+1) USB ports (P₁ to P_{N+1}), the PD controllers (PDC₁ to PDC_{N+1}) respectively connected to the power reception devices (D₁ to D_{N+1}) notify the master controller of the Wc and the Wu for each of the power reception devices (D₁ to D_{N+1}), and
perform the following Steps 4, 5, and 6,
Step 4:
the master controller determines whether or not Relation (5): Wc > Wu is established for each of the power reception devices (D₁ to D_{N+1}), when none of the power reception devices (D₁ to D_{N+1}) that satisfies the Relation (5) is detected, the master controller does not proceed to next Step 5 and waits for a next notification related to the Wc and the Wu provided by the PD controllers (PDC₁ to PDC_{N+1}), and when one or more power reception devices (Dₕ) for which the Relation (5) is established are detected, the Step 4 proceeds to the next Step 5,
Step 5:
the master controller determines maximum power (Wrc) which allows a re-contract with the power reception device (Dₕ) by referring to the Wₘₐₓ, the Wc, the Wu, and the Wₘᵢₙ and transmits the Wrc to a PD controller (PDCₕ) connected to the power reception device (Dₕ),
Step 6:
the PD controller (PDCₕ) that has received the Wrc generates a PDO list based on the Wrc, performs a negotiation with the power reception device (Dₕ) by using the PDO list, and makes a re-contract with the power reception device (Dn) at a lower power value.

9. The power supply apparatus according to Claim 8,
wherein in the Step 5,
the master controller
determines the maximum power (Wrc) which allows a re-contract with the power reception device (Dₕ) and maximum power (Wrc) which allows a re-contract with at least one power reception device (D_{L}) other than the power reception device (Dₕ) by referring to the Wₘₐₓ, the Wc, the Wu, and the Wₘᵢₙ,
transmits the Wrc to the PD controller (PDCₕ) connected to the power reception device (Dₕ), and
transmits the Wrc to a PD controller (PDC_{L}) connected to the power reception device (D_{L}), and
in the Step 6, the PD controller (PDCₕ) that has received the Wrc generates a PDO list based on the Wrc, performs a negotiation with the power reception device (Dₕ) by using the PDO list, and makes a re-contract with the power reception device (Dn) at a lower power value, and
the PD controller (PDC_{L}) that has received the Wrc generates a PDO list based on the Wrc, performs a negotiation with the power reception device (D_{L}) by using the PDO list, and makes a re-contract with the power reception device (D_{L}) at a higher power value.

10. The power supply apparatus according to Claim 9,
wherein the at least one power reception device (D_{L}) includes the power reception device (D_{N+1}) where a connection is made at an (N+1)-th place.

11. The power supply apparatus according to Claim 8,
wherein the Steps 4, 5, and 6 are repeated in this order unless the power reception device is inserted or removed.

12. The power supply apparatus according to Claim 11,
wherein the Step 4 is performed at fixed time intervals unless the power reception device is inserted or removed.

13. The power supply apparatus according to Claim 1,
wherein the plurality of USB ports, which are compatible with the USB-PD standard, are compatible with a USB Type-C standard.

14. A power supply method comprising:
in a power supply apparatus that includes a plurality of USB ports compatible with a USB-PD standard, a plurality of PD controllers, and a master controller, in which the PD controller is disposed in each of the plurality of USB ports and the master controller is capable of communicating with each of the plurality of PD controllers,
in a case where an upper limit value of total supplied power of the power supply apparatus is denoted as Wₘₐₓ, contract power of a power reception device connected to the plurality of USB ports is denoted as Wc, and used power of the power reception device connected to the plurality of USB ports is denoted as Wu (where the Wu is a value obtained by performing a filter process on an actually measured value of power consumption of the power reception device),
causing the PD controllers (PDC₁ to PDC_{N}), in a state in which N (where N is an integer equal to or greater than 1) power reception devices (D₁ to D_{N}) are connected to N USB ports (P₁ to P_{N}), which are respectively connected to the power reception devices (D₁ to D_{N}), to notify the master controller of the Wc and the Wu for each of the power reception devices (D₁ to D_{N}); and
starting power supply when an (N+1)-th power reception device (D_{N+1}) is connected to a USB port (P_{N+1}) other than the USB ports (P₁ to P_{N}), for the power reception device (D_{N+1}) through the following Steps 1, 2, and 3,
Step 1:
a PD controller (PDC_{N+1}) connected to the USB port (P_{N+1}) transmits a connection signal of the power reception device (D_{N+1}) to the master controller without acquiring a power profile of the power reception device (D_{N+1}),
Step 2:
the master controller that has received the connection signal determines maximum power (W_{N+1}) that is capable of being supplied to the power reception device (D_{N+1}) by referring to the Wₘₐₓ, the Wc, and the Wu without acquiring the power profile of the power reception device (D_{N+1}) and transmits the W_{N+1} to the PD controller (PDC_{N+1}),
Step 3:
the PD controller (PDC_{N+1}) that has received the W_{N+1} generates a power delivery object (PDO) list based on the W_{N+1} without acquiring the power profile of the power reception device (D_{N+1}), performs a negotiation with the power reception device (D_{N+1}) by using the PDO list, and makes a contract with the power reception device (D_{N+1}).

15. The power supply method according to Claim 14,
wherein in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is established, the master controller that has received the connection signal determines the W_{N+1} by referring to the Wc, the Wu, the [Wₘₐₓ - Wc_{(1toN)}], and the Wₘᵢₙ without acquiring the power profile of the power reception device (D_{N+1}) and transmits the W_{N+1} to the PD controller (PDC_{N+1}), and
in the Step 3, the PD controller (PDC_{N+1}) that has received the W_{N+1} generates a power delivery object (PDO) list based on the W_{N+1} without acquiring the power profile of the power reception device (D_{N+1}), performs a negotiation with the power reception device (D_{N+1}) by using the PDO list, and makes a contract with the power reception device (D_{N+1}).

16. The power supply method according to Claim 15,
wherein in the Step 2, in a case where the master controller that has received the connection signal detects at least one power reception device (D_{H0}) for which Relation (4): Wc > Wu is established among the power reception devices (D₁ to D_{N}) by referring to the Wc, the Wu, the [Wₘₐₓ - Wc_{(1toN)}], and the Wₘᵢₙ,
the master controller
determines maximum power (Wrc), which allows a re-contract with the power reception device (D_{H0}), and the W_{N+1},
transmits the Wrc to a PD controller (PDC_{H0}) connected to the power reception device (D_{H0}), and
transmits the W_{N+1} to the PD controller (PDC_{N+1}), and
in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value, and
the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

17. The power supply method according to Claim 14,
wherein in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is not established and the master controller detects one power reception device (D_{H1}), among the N power reception devices (D₁ to D_{N}), that satisfies Relation (2): (Wc - Wu) ≥ Wₘᵢₙ,
the master controller that has received the connection signal
determines maximum power (Wrc), which allows a re-contract with the power reception device (D_{H1}), and the W_{N+1} by referring to the Wₘₐₓ, the Wc, the Wu, and the Wₘᵢₙ,
transmits the Wrc to a PD controller (PDC_{H1}) connected to the power reception device (D_{H1}), and
transmits the W_{N+1} to the PD controller (PDC_{N+1}), and
in the Step 3, the PD controller (PDC_{H1}) that has received the Wrc generates a PDO list based on the Wrc, performs a negotiation with the power reception device (D_{H1}) by using the PDO list, and makes a re-contract with the power reception device (D_{H1}) at a lower power value, and
the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

18. The power supply method according to Claim 17,
wherein in the Step 2, in a case where the master controller that has received the connection signal detects at least one power reception device (D_{H0}) other than the power reception device (D_{H1}) for which Relation (4): Wc > Wu is established among the power reception devices (D₁ to D_{N}) by referring to the Wₘₐₓ, the Wc, the Wu, and the Wₘᵢₙ,
the master controller
determines maximum power (Wrc) which allows a re-contract with the power reception device (D_{H0}), the maximum power (Wrc) which allows a re-contract with the power reception device (D_{H1}), and the W_{N+1},
transmits the Wrc to a PD controller (PDC_{H0}) connected to the power reception device (D_{H0}),
transmits the Wrc to the PD controller (PDC_{H1}) connected to the power reception device (D_{H1}), and
transmits the W_{N+1} to the PD controller (PDC_{N+1}), and
in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value,
the PD controller (PDC_{H1}) that has received the Wrc generates a PDO list based on the Wrc, performs a negotiation with the power reception device (D_{H1}) by using the PDO list, and makes a re-contract with the power reception device (D_{H1}) at a lower power value, and
the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

19. The power supply method according to Claim 14,
wherein in the Step 2, in a case where Relation (1): (Wₘₐₓ - Wc_{(1toN)}) ≥ Wₘᵢₙ (Wc_{(1toN)} is a sum of contract powers Wc (Wc₁ to Wc_{N}) of the N power reception devices (D₁ to D_{N}), and Wₘᵢₙ is a minimum supplied power value at the USB port in accordance with a USB Type-C standard) is not established and the master controller does not detect one power reception device (D_{H1}), among the N power reception devices (D₁ to D_{N}), that satisfies Relation (2): (Wc - Wu) >_ Wmin,
the master controller detects m (where m is an integer that satisfies 1 ≤ m ≤ N) power reception devices (D_{H2}), among the N power reception devices (D₁ to D_{N}), that satisfy Relation (3): Wc ≥ (Wₘᵢₙ + Wₘᵢₙ), and
the master controller that has received the connection signal
determines maximum power (Wrc), which allows a re-contract with the power reception device (D_{H2}), and the W_{N+1} by referring to the Wₘₐₓ, the Wc, the Wu, and the Wₘᵢₙ,
transmits the Wrc to a PD controller (PDC_{H2}) connected to the power reception device (D_{H2}), and
transmits the W_{N+1} to the PD controller (PDC_{N+1}), and
in the Step 3, the PD controller (PDC_{H2}) that has received the Wrc generates a PDO list based on the Wrc, performs a negotiation with the power reception device (D_{H2}) by using the PDO list, and makes a re-contract with the power reception device (D_{H2}) at a lower power value, and
the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

20. The power supply method according to Claim 19,
wherein in the Step 2, in a case where the master controller that has received the connection signal detects at least one power reception device (D_{H0}) other than the power reception device (D_{H1}) for which Relation (4): Wc > Wu is established among the power reception devices (D₁ to D_{N}) by referring to the Wₘₐₓ, the Wc, the Wu, and the Wₘᵢₙ,
the master controller
determines maximum power (Wrc) which allows a re-contract with the power reception device (D_{H0}), the maximum power (Wrc) which allows a re-contract with the power reception device (D_{H2}), and the W_{N+1},
transmits the Wrc to a PD controller (PDC_{H0}) connected to the power reception device (D_{H0}),
transmits the Wrc to the PD controller (PDC_{H2}) connected to the power reception device (D_{H2}), and
transmits the W_{N+1} to the PD controller (PDC_{N+1}), and
in the Step 3, the PD controller (PDC_{H0}) that has received the Wrc generates a PDO list based on the Wrc, performs a negotiation with the power reception device (D_{H0}) by using the PDO list, and makes a re-contract with the power reception device (D_{H0}) at a lower power value,
the PD controller (PDC_{H2}) that has received the Wrc generates a PDO list based on the Wrc, performs a negotiation with the power reception device (D_{H2}) by using the PDO list, and makes a re-contract with the power reception device (D_{H2}) at a lower power value, and
the PD controller (PDC_{N+1}) that has received the W_{N+1} generates a PDO list based on the W_{N+1} without acquiring the power profile of the power reception device (D_{N+1}), performs a negotiation with the power reception device (D_{N+1}) by using the PDO list, and makes a contract with the power reception device (D_{N+1}).

21. The power supply method according to Claim 14,
wherein after the power supply to the power reception device (D_{N+1}) is started, in a state in which (N+1) power reception devices (D₁ to D_{N+1}) are connected to (N+1) USB ports (P₁ to P_{N+1}),
the PD controllers (PDC₁ to PDC_{N+1}) respectively connected to the USB ports (P₁ to P_{N+1})
notify the master controller of the Wc and the Wu for each of the power reception devices (D₁ to D_{N+1}), and
perform the following Steps 4, 5, and 6,
Step 4:
the master controller determines whether or not Relation (5): Wc > Wu is established for each of the power reception devices (D₁ to D_{N+1}), when none of the power reception devices (D₁ to D_{N+1}) that satisfies the Relation (5) is detected, the master controller does not proceed to next Step 5 and waits for a next notification related to the Wc and the Wu provided by the PD controllers (PDC₁ to PDC_{N+1}), and when one or more power reception devices (Dₕ) for which the Relation (5) is established are detected, the Step 4 proceeds to the next Step 5,
Step 5:
the master controller determines maximum power (Wrc) which allows a re-contract with the power reception device (Dₕ) by referring to the Wₘₐₓ, the Wc, the Wu, and the Wₘᵢₙ and transmits the Wrc to a PD controller (PDCₕ) connected to the power reception device (Dₕ),
Step 6:
the PD controller (PDCₕ) that has received the Wrc generates a PDO list based on the Wrc, performs a negotiation with the power reception device (Dₕ) by using the PDO list, and makes a re-contract with the power reception device (Dn) at a lower power value.

22. The power supply method according to Claim 21,
wherein in the Step 5, the master controller
determines the maximum power (Wrc) which allows a re-contract with the power reception device (Dₕ) and maximum power (Wrc) which allows a re-contract with at least one power reception device (D_{L}) other than the power reception device (Dₕ) by referring to the Wₘₐₓ, the Wc, the Wu, and the Wₘᵢₙ,
transmits the Wrc to the PD controller (PDCₕ) connected to the power reception device (Dₕ), and
transmits the Wrc to a PD controller (PDC_{L}) connected to the power reception device (D_{L}), and
in the Step 6, the PD controller (PDCₕ) that has received the Wrc generates a PDO list based on the Wrc, performs a negotiation with the power reception device (Dₕ) by using the PDO list, and makes a re-contract with the power reception device (Dn) at a lower power value, and
the PD controller (PDC_{L}) that has received the Wrc generates a PDO list based on the Wrc, performs a negotiation with the power reception device (D_{L}) by using the PDO list, and makes a re-contract with the power reception device (D_{L}) at a higher power value.

23. The power supply method according to Claim 22,
wherein the at least one power reception device (D_{L}) includes the power reception device (D_{N+1}) where a connection is made at an (N+1)-th place.

24. The power supply method according to Claim 21,
wherein the Steps 4, 5, and 6 are repeated in this order unless the power reception device is inserted or removed.

25. The power supply method according to Claim 24,
wherein the Step 4 is performed at fixed time intervals unless the power reception device is inserted or removed.

26. The power supply method according to Claim 14,
wherein the plurality of USB ports, which are compatible with the USB-PD standard, are compatible with a USB Type-C standard.
